# EUROPEAN PATENT APPLICATION

(11) **EP 4 572 164 A1**
(43) Date of publication of application: **18.06.2025**
(21) Application number: 22955048.8
(22) Date of filing: 12.08.2022
(51) Int. Cl.: H04B 7/0413, H04B 7/06

(54) **TERMINAL, WIRELESS COMMUNICATION METHOD, AND BASE STATION**

(71) Applicant: NTT DOCOMO, INC., Tokyo 100-6150 (JP)
(72) Inventor: MATSUMURA, Yuki, Tokyo 100-6150 (JP); NAGATA, Satoshi, Tokyo 100-6150 (JP); WANG, Jing, Beijing 100190 (CN); CHEN, Lan, Beijing 100190 (CN)
(74) Representative: Hoffmann Eitle
(86) International application number: PCT/JP2022/030792
(87) International publication number: WO 2024/034133

(57) **Abstract**

A terminal according to an aspect of the present disclosure includes a receiving section that receives downlink control information (DCI) including one or more fields indicating a number of layers for physical uplink shared channel transmission, and a control section that determines the number of layers per coherent group for the physical uplink shared channel transmission, based on a specific field included in the DCI. According to an aspect of the present disclosure, UL transmission using more than four antenna ports can be appropriately controlled.

## Description

### Technical Field

The present disclosure relates to a terminal, a radio communication method, and a base station in next-generation mobile communication systems.

### Background Art

In a Universal Mobile Telecommunications System (UMTS) network, the specifications of Long-Term Evolution (LTE) have been drafted for the purpose of further increasing high speed data rates, providing lower latency and so on (see Non-Patent Literature 1). In addition, for the purpose of further high capacity, advancement and the like of the LTE (Third Generation Partnership Project (3GPP, registered trademark) Release (Rel.) 8 and Rel. 9), the specifications of LTE-Advanced (3GPP Rel. 10 to Rel. 14) have been drafted.

Successor systems of LTE (for example, also referred to as "5th generation mobile communication system (5G)," "5G+ (plus)," "6th generation mobile communication system (6G)," "New Radio (NR)," "3GPP Rel. 15 (or later versions)," and so on) are also under study.

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

### Summary of Invention

### Technical Problem

Rel-15 NR supports Uplink (UL) Multi Input Multi Output (MIMO) transmission across up to four layers. For future NR, support of UL transmission across more than four layers has been under study in order to achieve higher spectral efficiency. For example, for Rel-18 NR, studies have been conducted on up to rank-6 transmission using six antenna ports, up to rank-6 or -8 transmission using eight antenna ports, and the like.

However, for transmission using a precoder for UL transmission using more than four antenna ports, substantial studies have not been conducted on methods for determining the number of layers for each antenna group. Unless this is made clear, an increase in communication throughput may be suppressed.

In view of this, the present disclosure has one object to provide a terminal, a radio communication method, and a base station that enable appropriate control of UL transmission using more than four antenna ports.

### Solution to Problem

A terminal according to an aspect of the present disclosure includes a receiving section that receives downlink control information (DCI) including one or more fields indicating a number of layers for physical uplink shared channel transmission, and a control section that determines the number of layers per coherent group for the physical uplink shared channel transmission, based on a specific field included in the DCI.

### Advantageous Effects of Invention

According to an aspect of the present disclosure, UL transmission using more than four antenna ports can be appropriately controlled.

### Brief Description of Drawings

[FIG. 1] FIG. 1 is a diagram to show an example of a table of precoding matrices W for single-layer (rank-1) transmission using four antenna ports with a transform precoder being disabled in Rel-16 NR.
[FIG. 2] FIG. 2 is a diagram to show an example of a table of the precoding matrices W for two-layer (rank-2) transmission using four antenna ports with the transform precoder being disabled in Rel-16 NR.
[FIG. 3] FIG. 3 is a diagram to show an example of a table of the precoding matrices W for three-layer (rank-3) transmission using four antenna ports with the transform precoder being disabled in Rel-16 NR.
[FIG. 4] FIG. 4 is a diagram to show an example of a table of the precoding matrices W for four-layer (rank-4) transmission using four antenna ports with the transform precoder being disabled in Rel-16 NR.
[FIG. 5] FIG. 5A is a diagram to show an example of a table of a precoding matrices W for single-layer (rank-1) transmission using two antenna ports in Rel-16 NR. FIG. 5B is a diagram to show an example of a table of the precoding matrices W for two-layer (rank-2) transmission using two antenna ports with the transform precoding being disabled in Rel-16 NR.
[FIG. 6] FIG. 6 is a diagram to show an example of correspondence between both a field value for precoding information and number of layers and both the number of layers and TPMI in Rel-16 NR.
[FIG. 7] FIGS. 7A to 7C are diagrams to show an SRI indication or a second SRI indication during transmission of a codebook-based PUSCH in Rel. 17.
[FIG. 8] FIG. 8 is a diagram to show an example of an antenna layout of eight antenna ports.
[FIG. 9] FIG. 9A is a diagram to show an example of a new precoder for three layers obtained by reusing an existing four-port partial-coherent precoder. FIG. 9B is a diagram to show an example of a six-layer precoder with four layers from one coherent group and two layers from another coherent group.
[FIG. 10] FIG. 10A is a diagram to show an example of a four-layer precoder with two layers from one coherent group and two layers from another coherent group. FIG. 10B is a diagram to show an example of an eight-layer precoder with four two-layer precoders from four coherent groups.
[FIG. 11] FIGS. 11A and 11B are diagrams to show an example of fields of DCI required to specify precoding matrices.
[FIG. 12] FIG. 12 is a diagram to show an example of sets of the numbers of layers corresponding to precoding matrices.
[FIG. 13] FIG. 13 is a diagram to show an example of correspondence between the value of a precoding information field and both the set of the numbers of layers and a TPMI index according to a first embodiment.
[FIG. 14] FIG. 14 is a diagram to show an example of correspondence between the value of the precoding information field and both the set of the numbers of layers and the TPMI index according to the first embodiment.
[FIG. 15] FIG. 15 is a diagram to show an example of the sets of the numbers of layers corresponding to precoding matrices.
[FIG. 16] FIGS. 16A and 16B are diagrams to show an example of correspondence between the value of a rank set specification field and the set of the numbers of layers according to a second embodiment.
[FIG. 17] FIG. 17 is a diagram to show an example of correspondence between the value of the rank set specification field and the set of the numbers of layers according to the second embodiment.
[FIG. 18] FIGS. 18A and 18B are diagrams to show an example of correspondence between the value of an ordering field and the ordering of coherent groups according to a third embodiment.
[FIG. 19] FIG. 19 is a diagram to show an example of correspondence between the value of the ordering field and the ordering of the coherent groups according to the third embodiment.
[FIG. 20] FIG. 20 is a diagram to show an example of a schematic structure of a radio communication system according to one embodiment.
[FIG. 21] FIG. 21 is a diagram to show an example of a structure of a base station according to one embodiment.
[FIG. 22] FIG. 22 is a diagram to show an example of a structure of a user terminal according to one embodiment.
[FIG. 23] FIG. 23 is a diagram to show an example of a hardware structure of the base station and the user terminal according to one embodiment.
[FIG. 24] FIG. 24 is a diagram to show an example of a vehicle according to one embodiment.

### Description of Embodiments

### (Control of Transmission of SRS and PUSCH)

In Rel-15 NR, a terminal (user terminal, User Equipment (UE)) may receive information to be used for transmission of a reference signal for measurement (for example, sounding reference signal (SRS)) (SRS configuration information, for example, a parameter in an RRC control element "SRS-Config").

Specifically, the UE may receive at least one of information related to one or a plurality of SRS resource sets (SRS resource set information, for example, an RRC control element "SRS-ResourceSet") and information related to one or a plurality of SRS resources (SRS resource information, for example an RRC control element "SRS-Resource").

One SRS resource set may be related to a given number of SRS resources (may group the given number of SRS resources). Each SRS resource may be identified by an SRS resource indicator (SRI) or an SRS resource ID (Identifier).

The SRS resource set information may include an SRS resource set ID (SRS-ResourceSetId), a list of SRS resource IDs (SRS-ResourceId) used in the resource set, an SRS resource type, and information of SRS usage.

Here, the SRS resource type may indicate one of a periodic SRS (P-SRS), a semi-persistent SRS, and an aperiodic CSI (Aperiodic SRS (A-SRS)). Note that the UE may periodically transmit the P-SRS and the SP-SRS (or periodically after activation) and transmit the A-SRS based on an SRS request in DCI.

The usage (RRC parameter "usage," L1 (Layer-1) parameter "SRS-SetUse") may be, for example, beam management (beamManagement), codebook (CB), non-codebook (noncodebook (NCB)), antenna switching, or the like. An SRS with codebook or non-codebook usage may be used to determine a precoder for codebook-based or non-codebook-based uplink shared channel (Physical Uplink Shared Channel (PUSCH)) transmission based on an SRI.

For example, in a case of codebook-based transmission, the UE may determine a precoder (precoding matrix) for PUSCH transmission based on the SRI, a transmitted rank indicator (TRI), a transmitted precoding matrix indicator (TPMI), and the like. In a case of non-codebook-based transmission, the UE may determine the precoder for PUSCH transmission based on the SRI.

The SRS resource information may include an SRS resource ID (SRS-ResourceId), the number of SRS ports, an SRS port number, a transmission Comb, SRS resource mapping (for example, time and/or frequency resource position, a resource offset, a resource period, the number of repetitions, the number of SRS symbols, an SRS bandwidth, and the like), hopping related information, an SRS resource type, a sequence ID, SRS spatial relation information, and the like.

The SRS spatial relation information (for example, an RRC information element "spatialRelationInfo") may indicate the information of the spatial relation between a given reference signal and the SRS. The given reference signal may be at least one of a synchronization signal/physical broadcast channel (SS/PBCH) block, a channel state information reference signal (CSI-RS)), and the SRS (for example, another SRS). The SS/PBCH block may be referred to as a synchronization signal block (SSB).

The SRS spatial relation information may include at least one of an SSB index, a CSI-RS resource ID, and an SRS resource ID as an index of the above-described given reference signal.

Note that, in the present disclosure, an SSB index, an SSB resource ID, and an SSB Resource Indicator (SSBRI) may be interchangeably interpreted. A CSI-RS index, a CSI-RS resource ID, and a CSI-RS Resource Indicator (CRI) may be interchangeably interpreted. An SRS index, an SRS resource ID, and an SRI may be interchangeably interpreted.

The SRS spatial relation information may include a serving cell index, a BWP index (BWP ID), or the like corresponding to the above-described given reference signal.

In a case where a given SRS resource is configured with spatial relation information related to the SSB or CSI-RS and the SRS, the UE may transmit the SRS resource using the same spatial domain filter (spatial domain transmission filter) as a spatial domain filter (spatial domain reception filter) for reception of the SSB or the CSI-RS. In this case, for the UE, a UE receive beam for the SSB or the CSI-RS may be assumed to be the same as a UE transmit beam for the SRS.

In a case where a given SRS (target SRS) resource is configured with spatial relation information related to another SRS (reference SRS) and the given SRS (target SRS), the UE may transmit the target resource using the same spatial domain filter (spatial domain transmission filter) as a spatial domain filter (spatial domain reception filter) for transmission of the reference SRS. In other words, in this case, for the UE, the UE transmit beam for the reference SRS may be assumed to be the same as the UE transmit beam for the target SRS.

Based on the value of a given field (for example, an SRS resource indicator (SRI) field) in the DCI (for example, DCI format 0_1), the UE may determine the spatial relation of the PUSCH scheduled by the DCI. Specifically, the UE may use, for PUSCH transmission, the spatial relation information (for example, an RRC information element "spatialRelationInfo") of the SRS resource determined based on the value (for example, the SRI) of the given field.

In Rel-15/16 NR, when codebook-based transmission is used for the PUSCH, the UE may be configured, by RRC, with an SRS resource set including up to two SRS resources with codebook usage and may be indicated with one of the up to two SRS resources by the DCI (one-bit SRI field). A transmit beam for the PUSCH may be specified by the SRI field.

Based on the precoding information and number of layers field (hereinafter referred to as the precoding information field), the UE may determine the TPMI and the number of layers (transmission rank) for the PUSCH. The UE may select a precoder from a codebook for uplink for the same number of ports as the number of SRS ports indicated by a higher layer parameter "nrofSRS-Ports" configured for the SRS resource specified by the above-described SRI field, based on the TPMI, the number of layers, and the like.

In Rel-15/16 NR, when non-codebook-based transmission is used for a PUSCH, the UE may be configured, by RRC, with an SRS resource set including up to four SRS resources with non-codebook usage and may be indicated with one or more of the up to four SRS resources by the DCI (two-bit SRI field).

The UE may determine the number of layers (transmission rank) for the PUSCH, based on the SRI field. For example, the UE may judge that the number of SRS resources indicated by the SRI field is the same as the number of layers for the PUSCH. The UE may calculate a precoder for the SRS resource.

When a CSI-RS related to the SRS resource (or SRS resource set to which the SRS resource belongs) (which may be referred to as an associated CSI-RS) is configured in a higher layer, a transmit beam for the PUSCH may be calculated based on (measurement of) the configured related CSI-RS. Otherwise, a transmit beam for the PUSCH may be specified by an SRI.

Note that the UE may be configured with whether to use codebook-based PUSCH transmission or use non-codebook-based PUSCH transmission by a higher layer parameter "txConfig" indicating a transmission scheme. The parameter may indicate a value of "codebook" or "non-codebook (nonCodebook)."

In the present disclosure, a codebook-based PUSCH (codebook-based PUSCH transmission, codebook-based transmission) may mean a PUSCH when the UE is configured with "codebook" as a transmission scheme. In the present disclosure, a non-codebook-based PUSCH (non-codebook-based PUSCH transmission, non-codebook-based transmission) may mean a PUSCH when the UE is configured with "non-codebook" as a transmission scheme.

### (Determination of PUSCH Precoder in Codebook (CB)-based Transmission)

As described above, in a case of codebook (CB)-based transmission, the UE may determine a precoder for PUSCH transmission based on the SRI, the TRI, the TPMI, and the like.

The UE may be notified of the SRI, the TRI, the TPMI, and the like by using downlink control information (DCI). The SRI may be specified by an SRS Resource Indicator field (SRI field) of the DCI or may be specified by a parameter "srs-ResourceIndicator" included in an RRC information element "ConfiguredGrantConfig" for a configured grant PUSCH.

The TRI and the TPMI may be specified by precoding information and number of layers field ("Precoding information and number of layers" field) of the DCI. For simplicity, the precoding information and number of layers field is also referred to simply as the precoding information field.

The UE may report UE capability information related to a precoder type and be configured, by a base station, with the precoder type based on the UE capability information by higher layer signaling. The UE capability information may be precoder type information to be used by the UE in PUSCH transmission (which may, for example, be indicated by an RRC parameter "pusch-TransCoherence").

The UE may determine a precoder to be used for the PUSCH transmission, based on precoder type information (for example, an RRC parameter "codebookSubset") included in PUSCH configuration information notified by higher layer signaling (for example, "PUSCH-Config" information element of RRC signaling). The UE may be configured with a subset of PMIs specified by the TPMI, by codebookSubset.

Note that the precoder type may be specified by any of or a combination of at least two of full coherent (fully coherent), partial coherent, and non-coherent (non coherent) (which may be indicated, for example, by a parameter such as "fullyAndPartialAndNonCoherent" or "partialAndNonCoherent."

For example, an RRC parameter "pusch-TransCoherence" indicating the UE capability may indicate full-coherent (fullCoherent), partial-coherent (partialCoherent), or non-coherent (nonCoherent). An RRC parameter "codebookSubset" may indicate full and partial and non coherent (fullyAndPartialAndNonCoherent), partial and non coherent (partialAndNonCoherent), ornon coherent (nonCoherent).

Full coherent may mean that all the antenna ports to be used for transmission are synchronized (which may be expressed as being able to be matched in terms of phase, being able to be phase-controlled for each coherent antenna port, being able to have a precoder appropriately applied for each coherent antenna port, and the like). Partial coherent may mean that some ports of the antenna ports to be used for transmission are synchronized but the ports and the other ports are not synchronized. Non-coherent may mean that the antenna ports to be used for transmission are not synchronized.

Note that a UE that supports a full-coherent precoder type, may be assumed to support a partial-coherent precoder type and a non-coherent precoder type. A UE that supports the partial-coherent precoder type may be assumed to support the non-coherent precoder type.

In the present disclosure, the following may be interchangeably interpreted: the precoder type, coherency, PUSCH transmission coherence, a coherent type, a coherence type, a codebook type, a codebook subset, a codebook subset type, and the like.

The UE may determine a precoding matrix corresponding to the TPMI index obtained from DCI for scheduling UL transmission (for example, DCI format 0_1, this similarly applies below), from a plurality of precoders (which may be referred to as precoding matrices, codebooks, and the like) for CB based transmission.

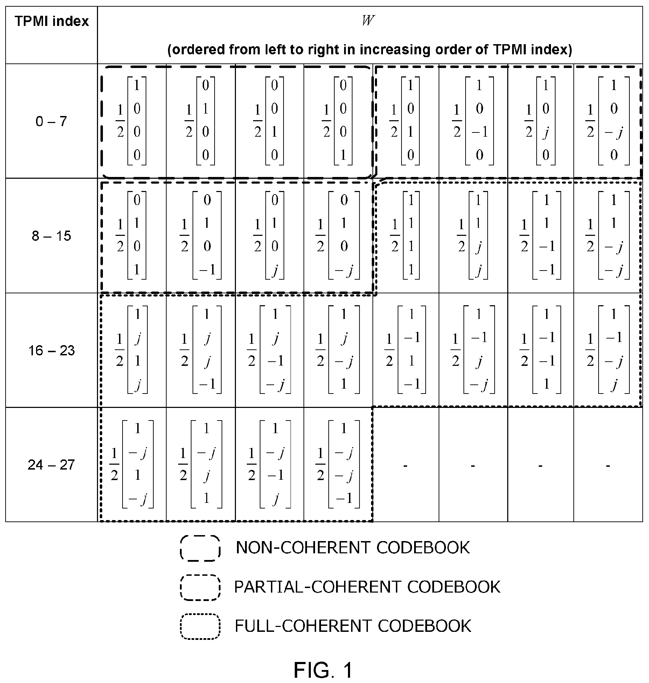

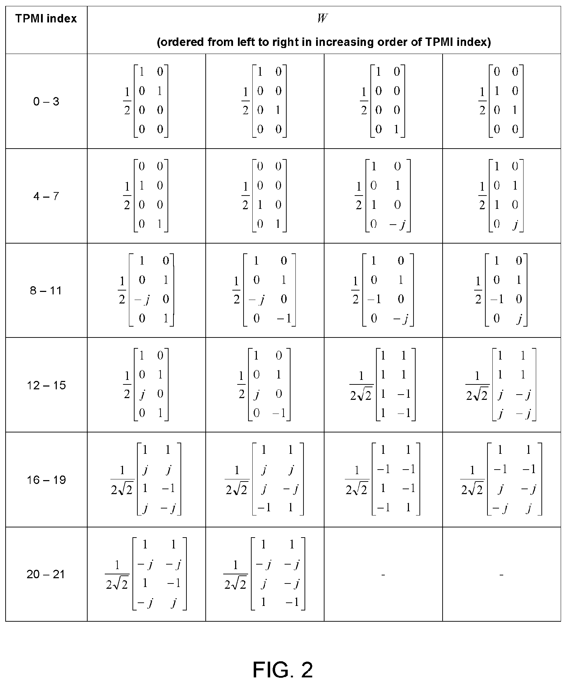

FIG. 1 is a diagram to show an example of association between codebook subsets and TPMI indices. FIG. 1 corresponds to a table of precoding matrices W for single-layer (rank-1) transmission using four antenna ports with transform precoding (which may also be referred to as a transformer precoder) being disabled in Rel-16 NR. FIG. 1 shows the W corresponding to the TPMI indices and arranged from left to right in increasing order of the TPMI index (this also applies to FIG. 2).

The correspondence (which may also be referred to as a table) between the TPMI indices and the corresponding W as shown in FIG. 1 is also referred to as a codebook. A part of the codebook is referred to as a codebook subset.

In FIG. 1, when the codebook subsets (codebookSubset) are fully coherent and partially coherent and non-coherent (fullyAndPartialAndNonCoherent), the UE is notified of one of the TPMIs (TPMI indices) of from 0 to 27 for single-layer transmission. When the codebook subsets are partially coherent and non-coherent (PartialAndNonCoherent), the UE is configured with one of the TPMIs of from 0 to 11 for single-layer transmission. When the codebook subsets are non-coherent (nonCoherent), the UE is configured with one of the TPMIs of from 0 to 3 for single-layer transmission.

In FIG. 1, when the UE is notified of the TPMI ranging from 0 to 3, a non-coherent precoder is applied. When the UE is notified of the TPMI ranging from 4 to 11, a partial-coherent precoder is applied. When the UE is notified of the TPMI ranging from 12 to 27, a full-coherent precoder is applied.

FIG. 2 corresponds to tables of the precoding matrices W for two-to-four layer (rank-2-to-4) transmission using four antenna ports with the transform precoding being disabled in Rel-16 NR.

FIG. 2 shows that the TPMI of which the UE is notified for two-layer transmission ranges from 0 to 21 (the codebook subsets are fully coherent and partially coherent and non-coherent), ranges from 0 to 13 (the codebook subsets are partially coherent and non-coherent), or ranges from 0 to 5 (the codebook subsets are non-coherent).

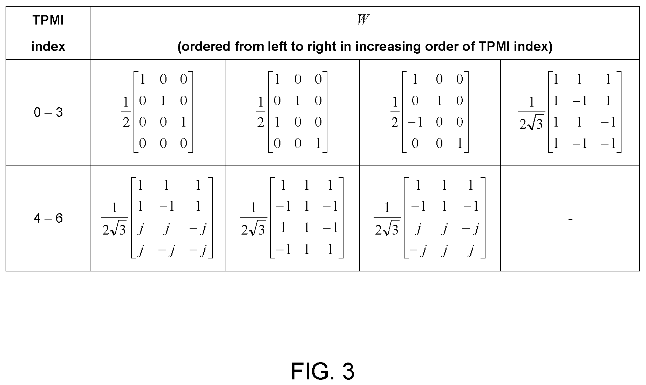

FIG. 3 shows that the TPMI of which the UE is notified for three-layer transmission ranges from 0 to 6 (the codebook subsets are fully coherent and partially coherent and non-coherent), ranges from 0 to 2 (the codebook subsets are partially coherent and non-coherent), or is 0 (the codebook subsets are non-coherent).

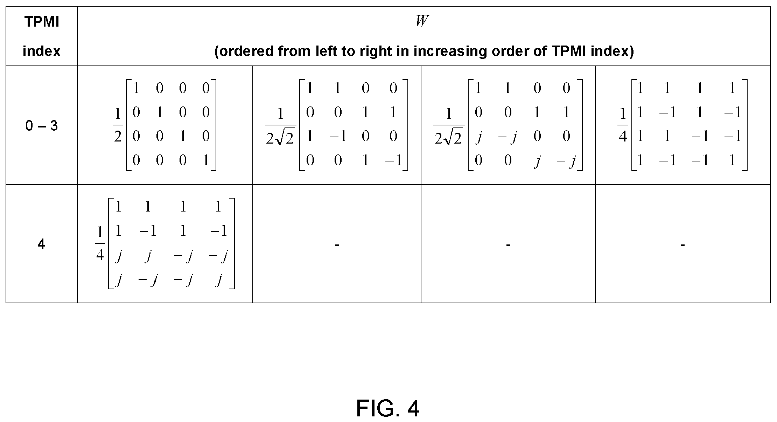

FIG. 4 shows that the TPMI of which the UE is notified for four-layer transmission ranges from 0 to 4 (the codebook subsets are fully coherent and partially coherent and non-coherent), ranges from 0 to 2 (the codebook subsets are partially coherent and non-coherent), or is 0 (the codebook subsets are non-coherent).

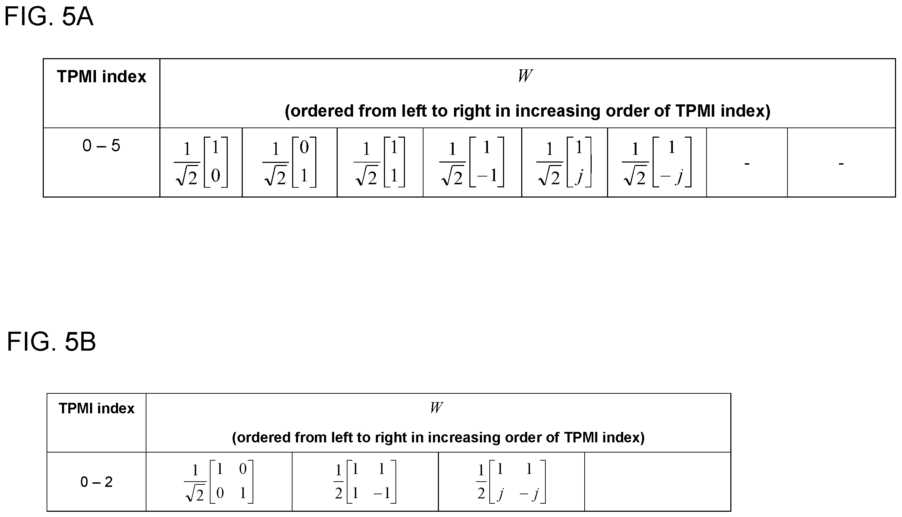

FIG. 5A is a diagram to show an example of a table of the precoding matrices W for single-layer (rank-1) transmission using two antenna ports in Rel-16 NR. FIG. 5B is a diagram to show an example of a table of the precoding matrices W for two-layer (rank-2) transmission using two antenna ports with the transform precoding being disabled in Rel-16 NR.

FIG. 5A shows that the TPMI of which the UE is notified for two-port single-layer transmission ranges from 0 to 5 (the codebook subsets are fully coherent and partially coherent and non-coherent) or ranges from 0 to 1 (the codebook subsets are non-coherent). When the TPMI of which the UE is notified ranges from 0 to 1, a non-coherent precoder is applied. When the TPMI of which the UE is notified ranges from 2 to 5, a full-coherent precoder is applied.

FIG. 5B shows that the TPMI of which the UE is notified for two-port two-layer transmission ranges from 0 to 2 (the codebook subsets are fully coherent and partially coherent and non-coherent) or is 0 (the codebook subsets are non-coherent).

Note that a precoding matrix in which only one of the elements in each column is not zero may be referred to as a non-coherent codebook. A precoding matrix in which only a given number of (more than one, and other than the number of all elements in a column) the elements in each column are not zero may be referred to as a partial-coherent codebook. A precoding matrix in which none of the elements in each column is zero may be referred to as a full-coherent codebook.

The non-coherent codebook and the partial-coherent codebook may also be referred to as antenna selection precoders, antenna port selection precoders, or the like. For example, the non-coherent codebook (non-coherent precoder) may also be referred to as a one-port selection precoder, a one-port port selection precoder, or the like. The partial-coherent codebook (non-coherent precoder) may also be referred to as an x-port (x is an integer of greater than one) selection precoder, an x-port port selection precoder, or the like. The full-coherent codebook may also be referred to as a non-antenna selection precoder, an all-port precoder, or the like.

Note that, in the present disclosure, the partial-coherent codebooks may correspond to the codebooks (precoding matrix) corresponding to the TPMIs specified by the DCI for codebook-based transmission, for the UE configured with a partial-coherent codebook subset (for example, an RRC parameter "codebookSubset" = "partialAndNonCoherent") excluding the codebooks corresponding to the TPMIs specified for the UE configured with a non-coherent codebook subset (for example, an RRC parameter "codebookSubset" = "nonCoherent") (in other words, for four-antenna-port single-layer transmission, the codebooks with TPMI = 4 to 11).

Note that, in the present disclosure, the full-coherent codebooks may correspond to the codebooks (precoding matrix) corresponding to the TPMIs specified by the DCI for codebook-based transmission, for the UE configured with a full-coherent codebook subset (for example, an RRC parameter "codebookSubset" = "fullyAndPartialAndNonCoherent") excluding the codebooks corresponding to the TPMIs specified for the UE configured with a partial-coherent codebook subset (for example, the RRC parameter "codebookSubset" = "partialAndNonCoherent") (in other words, for 4-antenna-port single-layer transmission, the codebooks with TPMI = 12 to 27).

Note that, as seen from FIGS. 5A and 5B, no partial-coherent precoder is provided for two-antenna-port transmission and thus that no configuration needs to be applied in which the codebook subsets are partially coherent and non-coherent for the antenna port.

### (Precoding Information Field)

As described above, based on the precoding information field of the DCI (for example, DCI format 0_1/0_2) scheduling the PUSCH, the UE may determine the TPMI and the number of layers (transmission rank) for the PUSCH.

For the codebook-based PUSCH, the number of bits in the precoding information field may be determined based on a configuration to enable or disable a transform precoder for the PUSCH (for example, a higher layer parameter transformPrecoder), a configuration for a codebook subset for the PUSCH (for example, the higher layer parameter codebookSubset), a configuration for the maximum number of layers for the PUSCH (for example, a higher layer parameter maxRank), a configuration for uplink full-power transmission for the PUSCH (for example, a higher layer parameter ul-FullPowerTransmission), the number of antenna ports for the PUSCH, and the like (the number of bits in the precoding information field may vary).

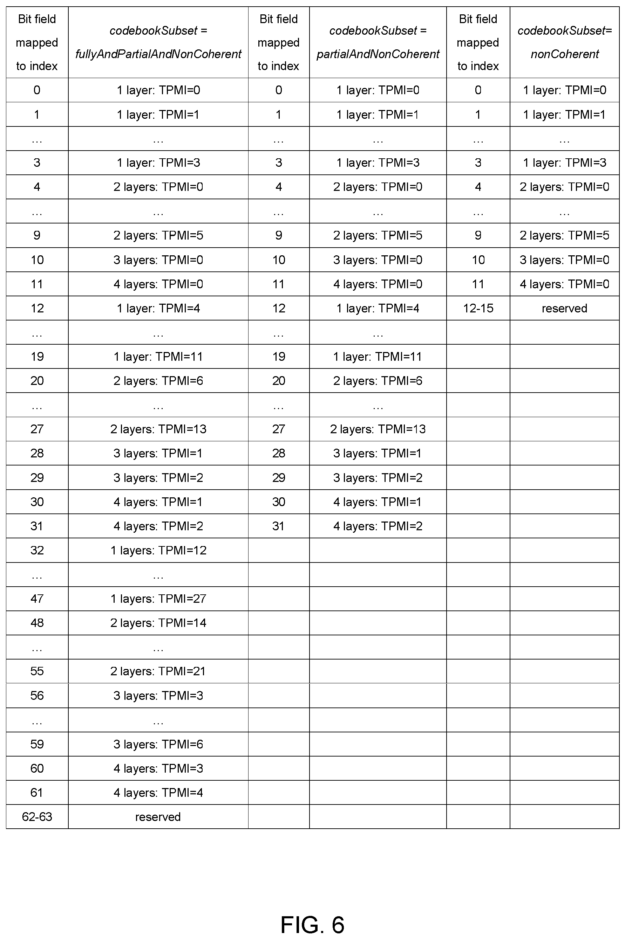

FIG. 6 is a diagram to show an example of correspondence between both a field value for precoding information and number of layers and both the number of layers and TPMI in Rel-16 NR. The correspondence in the present example is correspondence for four antenna ports in a case where a transform precoder is configured to be disabled and a maximum rank (maxRank) of 2, 3, or 4 is configured, where the uplink full-power transmission is not configured, where full power mode 2 (fullpowerMode2) is configured, or where fullpower is configured. Note that a person skilled in the art can naturally understand that "Bit field mapped to index" shown in the figures indicates the field value for the precoding information and number of layers.

In FIG. 6, the precoding information field includes 6 bits when the UE is configured with a full-coherent (fullyAndPartialAndNonCoherent) codebook subset, 5 bits when the UE is configured with a partial-coherent (partialAndNonCoherent) codebook subset, or 4 bits when the UE is configured with a non-coherent (nonCoherent) codebook subset.

Note that, as shown in FIG. 6, the number of layers and the TPMI corresponding to the value of a given precoding information field may be the same (common) regardless of the codebook subset configured for the UE. For example, in FIG. 6, the number of layers and the TPMI indicated by the value of the precoding information field = 0 to 11 may be the same for the full-coherent (fullyAndPartialAndNonCoherent) codebook subset, the partial-coherent (partialAndNonCoherent) codebook subset, and the non-coherent (nonCoherent) codebook subset. In FIG. 6, the number of layers and the TPMI indicated by the value of the precoding information field = 0 to 31 may be the same for the full-coherent (fullyAndPartialAndNonCoherent) codebook subset and the partial-coherent (partialAndNonCoherent) codebook subset.

Note that the precoding information field may include 0 bits for the non-codebook-based PUSCH. Note that the precoding information field may include 0 bits for a one-antenna-port codebook-based PUSCH.

### <SRS Configuration for Codebook-based PUSCH>

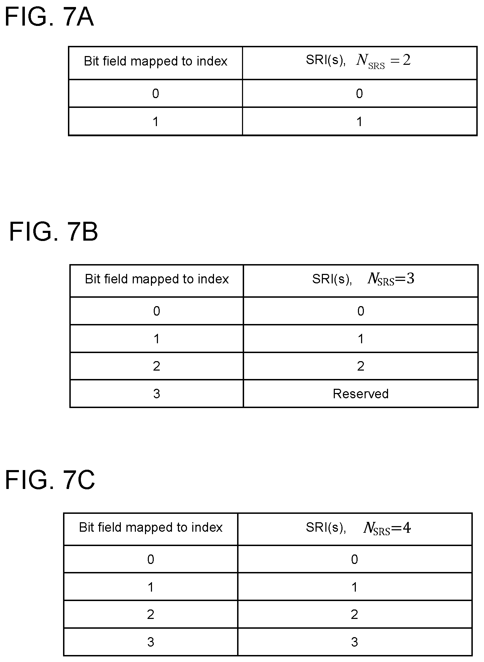

FIG. 7A is a diagram to show an SRI indication or a second SRI indication during codebook-based PUSCH transmission when ul-FullPowerTransmission is not configured, or ul-FullPowerTransmission = fullpowerMode1, or ul-FullPowerTransmission = fullpowerMode2, or ul-FullPowerTransmission = fullpower and N_{SRS} = 2 in Rel. 17. FIG. 7B is a diagram to show the SRI indication or the second SRI indication for the codebook-based PUSCH transmission when ul-FullPowerTransmission = fullpowerMode2 and N_{SRS} = 3 in Rel. 17. FIG. 7C is a diagram to show the SRI indication or the second SRI indication for the codebook-based PUSCH transmission when ul-FullPowerTransmission = fullpowerMode2 and N_{SRS} = 4 in Rel. 17.

The SRI indication corresponds to an SRS resource indicator field of the DCI, and the second SRI indication corresponds to a Second SRS resource indicator field of the DCI. The SRS resource set indicator field includes 2 bits when txConfig = nonCodeBook and two SRS resource sets are present that are configured by srs-ResourceSetToAddModList and that are related to "nonCodeBook" usage, or when txConfig = codeBook and two SRS resource sets are present that are configured by srs-ResourceSetToAddModList and that are related to "codeBook" usage. Otherwise the SRS resource set indicator field includes 0 bits.

The SRS resource indicator field includes [log₂(N_{SRS})] in accordance with FIGS. 7A to 7C when a higher layer parameter txConfig = codebook. N_{SRS} is the number of configured SRS resources in the SRS resource set indicated by the SRS resource set indicator field (if any). Otherwise, N_{SRS} is the number of configured SRS resources associated with a higher layer parameter usage of the value 'codeBook' within the SRS resource set configured by the higher layer parameter srs-ResourceSetToAddModList.

In the codebook-based transmission, the PUSCH is scheduled or semi-fixedly configured by DCI format 0_0, DCI format 0_1, or DCI format 0_2. Only one or two SRS resource sets can be configured in SRS-ResourceSetToAddModList including the higher layer parameter usage "codebook" of SRS-ResourceSet. Only one or two SRS resource sets can be configured in srs-ResourceSetToAddModListDCI-0-2 including the higher layer parameter usage "codebook" of SRS-ResourceSet.

In srs-ResourceSetToAddModList or srs-ResourceSetToAddModListDCI-0-2, when the two SRS resource sets are configured by configuring the higher layer parameter usage of SRS-ResourceSet as "codebook", one or two SRIs and one or two TPMIs are respectively provided by two SRS resource indication fields and two precoding information fields.

The UE applies the indicated SRI(s) and TPMI(s) to one or more PUSCH repetitions in accordance with the associated SRS resource set of PUSCH repetitions. When the two SRS resource sets are configured by SRS-ResourceSetToAddModList or srs-ResourceSetToAddModListDCI-0-2, and the higher layer parameter usage of SRS-ResourceSet is configured as "codebook", the UE does not expect that different numbers of SRS resources are configured in the two SRS resource sets.

In the codebook-based transmission, only one SRS resource from within the SRS resource set may be indicated based on the SRI. Except for a case where the higher layer parameter "ul-FullPowerTransmission" is configured as "fullpowerMode2", the maximum number of configured SRS resources for codebook-based transmission is two. When aperiodic SRS is configured for the UE, an SRS request field of the DCI triggers transmission of an aperiodic SRS resource.

Except for the case where the higher layer parameter "ul-FullPowerTransmission" is configured as "fullpowerMode2", in a case where a plurality of SRS resources are configured as "codebook" by SRS-ResourceSet, the UE expects that the higher layer parameter "nrofSRS-Port" of SRS-Resource in SRS-ResourceSet is configured at the same value for all the SRS resources.

When the higher layer parameter "ul-FullPowerTransmission" is configured as "fullpowerMode2", (1) to (3) described below are applied.
(1) The UE can configure, from among the SRS resource set with usage configured as "codebook", one SRS resource or a plurality of SRS resources including the same number or different numbers of SRS ports.
(2) When a plurality of SRS resources are configured in the SRS resource set, up to two different spatial relations can be configured for all the SRS resources in the SRS resource set with usage configured as "codebook".
(3) Depending on the capability of the UE, up to two or four SRS resources within the SRS resource set with usage configured as "codebook" are supported.

In a case of a normal codebook-based PUSCH, one SRS resource set can be configured that includes two SRS resources with the same number of ports. In a case of codebook-based PUSCH repetitions (for multiple transmission/reception points (TRPs)), two SRS resource sets may each be configured that include the same number of SRS resources. In the codebook base, in a case of "fullpowerMode2", one SRS resource set or SRS resources including the same number or different numbers of ports can be configured.

### (Transmission from More than Four Antenna Ports)

Rel-15/ 16 NR supports uplink (UL) Multi Input Multi Output (MIMO) transmission across up to four layers. For future radio communication systems, support of UL transmission across more than four layers has been under study in order to achieve higher spectrum efficiency. For example, for Rel-18 NR, studies have been conducted on up to rank-6 transmission using six antenna ports, up to rank-6 or -8 transmission using eight antenna ports, and the like.

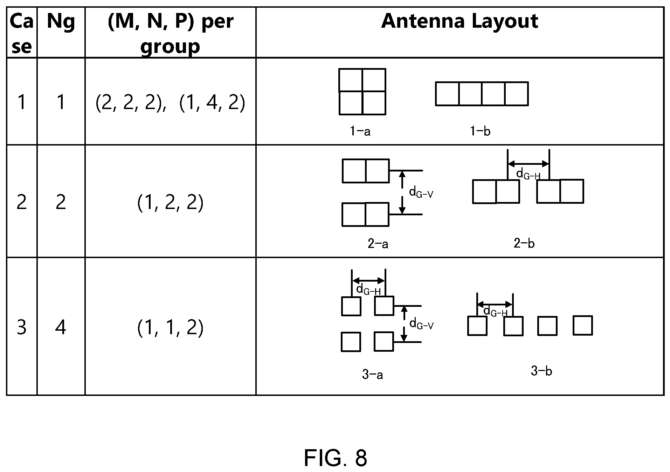

FIG. 8 is a diagram to show an example of an antenna layout of eight antenna ports. Ng is the number of antenna groups. M is the number of antennas (or antenna elements) in the first dimension, and N is the number of antennas (or antenna elements) in the second dimension. The first dimension and the second dimension are, for example, the horizontal direction and the vertical direction. P is the number of polarization planes. P = 2 indicates a cross polarized antenna.

The antenna group may be referred to as a coherent group. The coherent group may include one or more coherent ports. For example, a partial-coherent UE may include a plurality of coherent groups. The antenna ports may be coherent within the coherent group. The antenna ports need not be coherent between the coherent groups.

Each coherent group may correspond to a different transmission panel/transmission chain (Tx chain)/SRS resource set/RS resource set/spatial relation information (spatial relation info)/joint Transmission Configuration Indication state (joint TCI state)/UL TCI state/reception TRP. Here, the SRS resource set may correspond to an SRS resource set with codebook or non-codebook usage. Each coherent group may correspond to a different reception TRP. The coherent group may be referred to as a coherent antenna group, a port group, an antenna set, or the like.

The UE may report a supported antenna group/antenna arrangement information/coherent number as UE capability information. The UE may be configured, by higher layer signaling, with coherent groups (for example, the number of coherent groups and the number of ports in each of the coherent groups).

Note that the antenna layout is not limited to the example shown in FIG. 8. For example, the antenna layout may differ from the example in FIGS. 7A and 7B in terms of the number of panels on which antennas are arranged, the direction of panels, the coherency among the panels/antennas (fully coherent, partially coherent, non-coherent, and the like), the antenna arrangement in a particular direction (horizontal, vertical, or the like), and a polarized antenna structure (single polarization, cross polarization, the number of polarization planes, and the like). dG-H and dG-V respectively represent a horizontal interval and a vertical interval between the centers of adjacent antenna groups.

Rel-15/16 NR supports one codeword (CW) in one PUSCH, and for Rel-18 NR, the transmission, by the UE, of more than one CW in one PUSCH has been under study. For example, studies have been conducted on support of 2CW transmission for ranks 5 to 8, support of 2CW transmission for ranks 2 to 8, and the like.

For the UE in Rel. 15 and Rel. 16, only one beam/panel is assumed to be used for UL transmission at a given time. However, in Rel. 17 or later versions, simultaneous UL transmission (for example, PUSCH transmission) of a plurality of beams/a plurality of panels to one or more TRPs has been studied in order to improve the throughput and reliability of UL. Note that simultaneous PUSCH transmission of a plurality of beams/a plurality of panels may correspond to PUSCH transmission with more than four layers, or correspond to PUSCH transmission with four or less layers.

Studies have been conducted on precoding matrices for UL transmission using more than four antenna ports. For example, a codebook for eight-port transmission (which may also be referred to as eight transmission UL codebook (8 TX UL codebook)) is under study.

As shown in FIG. 6, previous specifications allow the one value of number of layers (up to four layers) and one TPMI index to be specified for the UE by one precoding information field. For transmission using more than four antenna ports, studies have been conducted on specification of the value of one number of layers (up to eight layers) and one TPMI index for the UE by one precoding information field using a table different from that in FIG. 6. In this case, for the table of the precoding matrices W as shown in FIG. 1, definition of a table with a rank of more than four allows eight-port transmission to be achieved based on the number of layers and the TPMI index of which the UE is notified.

Studies have also been conducted on specification of a plurality of combinations of one number of layers (up to four layers) and one TPMI index for the UE in such a manner that the DCI includes a plurality of precoding information fields (which may also be referred to as extended TPMI fields and the like). Each precoding information field may be associated with the coherent group.

In this case, the UE may reuse existing two- or four-port UL precoder in Rel. 15/16 to configure a new eight-port UL precoder. Examples will be described below with reference to the figures. Note that the figures also show representations using existing precoders W_{4TX}, W_{2TX}, and W₀. Here, W_{4TX} means an existing four-port UL precoder, W_{2TX} means an existing two-port UL precoder, and W₀ means a matrix in which all of the elements (components) are zero.

For the UE including two coherent groups, one or more existing precoders W_{4TX}/W_{2TX} may be reused to form a new eight-port precoder. For example, the UE including two coherent groups with four ports per group may perform eight-port transmission taking account of one TPMI indication per 4TX based on two TPMI indices of which the UE is notified.

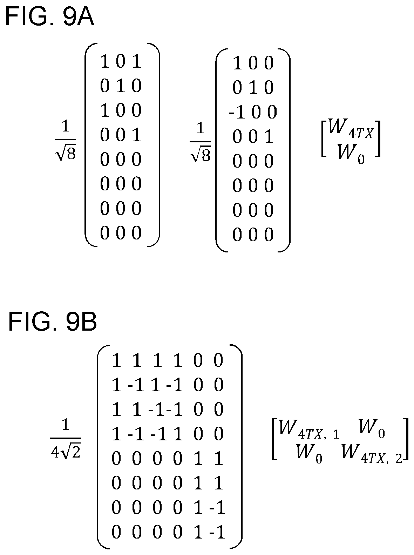

FIG. 9A is a diagram to show an example of a new precoder for three layers obtained by reusing an existing four-port partial-coherent precoder. In FIG. 9A, for example, an existing precoder for three layers is reused that is shown in FIG. 3.

FIG. 9B is a diagram to show an example of a six-layer precoder with four layers from one coherent group and two layers from another coherent group. In FIG. 9B, for example, existing precoders for two layers and four layers are reused that are shown in FIG. 2 and FIG. 4.

For the UE including four coherent groups, one, two, three, or four existing precoders W_{2TX} may be reused to form a new eight-port precoder. For example, the UE including four coherent groups with two ports per group may perform eight-port transmission taking account of one TPMI indication per 2TX based on four TPMI indices of which the UE is notified.

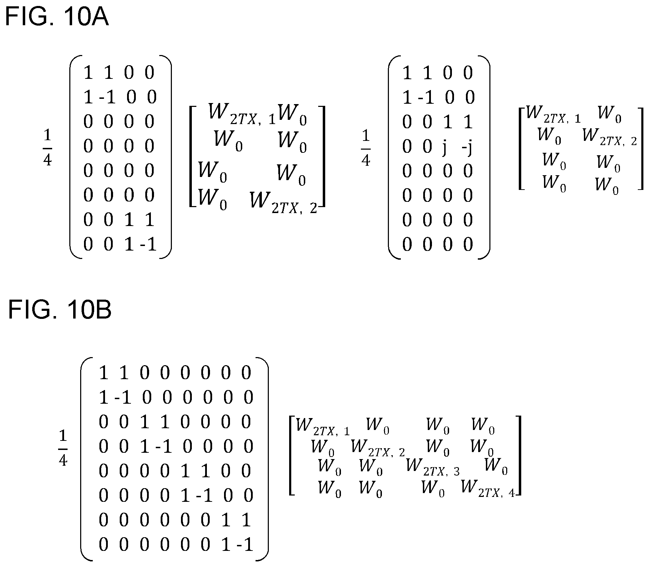

FIG. 10A is a diagram to show an example of a four-layer precoder with two layers from one coherent group and two layers from another coherent group. In FIG. 10A, for example, an existing precoder for two layers is reused that is shown in FIG. 5B.

FIG. 10B is a diagram to show an example of an eight-layer precoder with four two-layer precoders from four coherent groups. In FIG. 10B, for example, an existing precoder for two layers is reused that is shown in FIG. 5B.

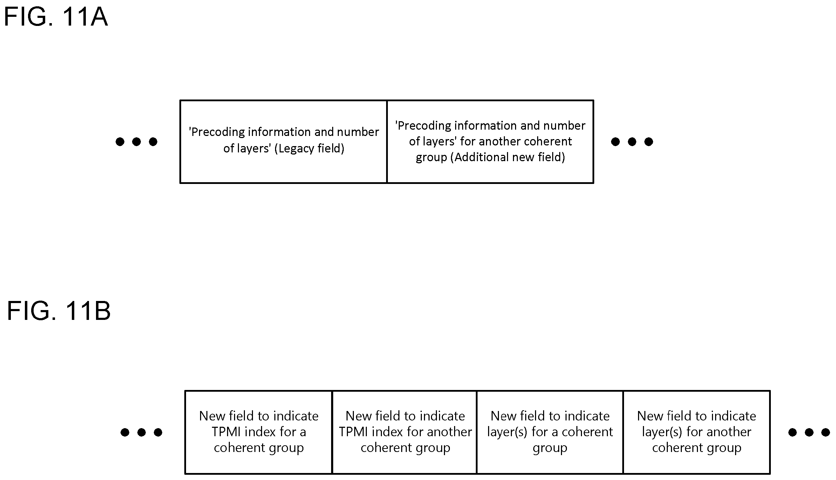

FIGS. 11A and 11B are diagrams to show an example of fields of DCI required to specify a precoding matrix. In the present example, an example of DCI for the UE including two coherent groups.

The DCI in FIG. 11A includes a plurality of precoding information fields. Each of the precoding information fields may be similar to an existing precoding information field. One of the precoding information fields indicates the TPMI index and the number of layers intended for a given coherent group, whereas the other precoding information field indicates the TPMI index and the number of layers intended for another given coherent group.

The DCI in FIG. 11B includes a plurality of sets of a new field indicating the TPMI index (which may be referred to as a TPMI index field) and a new field (which may be referred to as a layer indication field) indicating the layers (which may also indicate the number of layers or the rank). One of the sets indicates the TPMI index and the number of layers intended for a given coherent group, whereas the other set indicates the TPMI index and the number of layers intended for another coherent group. The precoding information fields in the DCI in FIG. 11B need not be utilized for PUSCH transmission.

### (Analysis)

As described above, when the value of one number of layers and one TPMI index are specified for the UE by one precoding information field, specifying one (total) number of layers is insufficient for the partial-coherent UE, which fails to recognize the number of layers for each coherent group and to appropriately perform transmission using the precoder based on the TPMI index.

Even when the DCI includes a plurality of precoding information fields (or a plurality of combinations of the TPMI index field and a layer indication field), the UE fails to appropriately perform transmission using the precoder based on each TPMI index unless which field corresponds to which coherent group is clarified.

Unless the transmission method based on the precoder is clarified, an increase in communication throughput may be suppressed.

Thus, the inventors of the present invention came up with the idea of a method for appropriately performing UL transmission using more than four antenna ports.

Embodiments according to the present disclosure will be described in detail with reference to the drawings as follows. The radio communication methods according to respective embodiments may each be employed individually, or may be employed in combination.

In the present disclosure, "A/B" and "at least one of A and B" may be interchangeably interpreted. In the present disclosure, "A/B/C" may mean "at least one of A, B, and C."

In the present disclosure, "notify," "activate," "deactivate," "indicate (or specify)," "select," "configure," "update," "determine," and the like may be interchangeably interpreted. In the present disclosure, "support," "control," "controllable," "operate," "operable," and the like may be interchangeably interpreted.

In the present disclosure, radio resource control (RRC), an RRC parameter, an RRC message, a higher layer parameter, a field, an information element (IE), a configuration, and the like may be interchangeably interpreted. In the present disclosure, a Medium Access Control control element (MAC Control Element (CE)), an update command, an activation/deactivation command, and the like may be interchangeably interpreted.

In the present disclosure, the higher layer signaling may be, for example, any one or combinations of Radio Resource Control (RRC) signaling, Medium Access Control (MAC) signaling, broadcast information, and the like.

In the present disclosure, the MAC signaling may use, for example, a MAC control element (MAC CE), a MAC Protocol Data Unit (PDU), or the like. The broadcast information may be, for example, a master information block (MIB), a system information block (SIB), minimum system information (Remaining Minimum System Information (RMSI)), other system information (OSI), or the like.

In the present disclosure, the physical layer signaling may be, for example, downlink control information (DCI), uplink control information (UCI), or the like.

In the present disclosure, an index, an identifier (ID), an indicator, a resource ID, and the like may be interchangeably interpreted. In the present disclosure, a sequence, a list, a set, a group, a cluster, a subset, and the like may be interchangeably interpreted.

In the present disclosure, a panel, a UE panel, a panel group, a beam, a beam group, a precoder, an Uplink (UL) transmission entity, a transmission/reception point (TRP), a base station, spatial relation information (SRI), a spatial relation, an SRS resource indicator (SRI), a control resource set (CORESET), a Physical Downlink Shared Channel (PDSCH), a codeword (CW), a transport block (TB), a reference signal (RS), an antenna port (for example, a demodulation reference signal (DMRS) port), an antenna port group (for example, a DMRS port group), a group (for example, a spatial relation group, a code division multiplexing (CDM) group, a reference signal group, a CORESET group, a Physical Uplink Control Channel (PUCCH) group, a PUCCH resource group), a resource (for example, a reference signal resource, an SRS resource), a resource set (for example, a reference signal resource set), a CORESET pool, a downlink Transmission Configuration Indication state (TCI state) (DL TCI state), an uplink TCI state (UL TCI state), a unified TCI state, a common TCI state, quasi-co-location (QCL), QCL assumption, and the like may be interchangeably interpreted.

In the present disclosure, the TPMI and the TPMI index may be interchangeably interpreted. The port and the antenna port may be interchangeably interpreted. The eight TX (eight transmission) may mean eight ports or eight antenna ports. The port/antenna port may mean a port/antenna port for UL (for example, SRS/PUSCH) transmission. In the present disclosure, the SRS resource set and the resource set may be interchangeably interpreted. The coherent group and the SRS resource set may be interchangeably interpreted.

In the present disclosure, the eight TX is mainly described, but five TX, six TX, seven TX, more than eight TX, four or less TX may be applied similarly to the eight TX. "8" in the embodiments described below may be interpreted as "n (n is an arbitrary integer). In this case, the number of layers/the number of ports and the like described above on the assumption that the maximum value is "8" can be appropriately interchangeably interpreted on the assumption that the maximum value is "n".

Note that, in the present disclosure, "have the capability of ... ing" may be interpreted as "support/report the capability of ... ing".

In the present disclosure, the rank, the transmission rank, the number of layers, and the number of antenna ports may be interchangeably interpreted. Application of one codeword and the number of layers being four or less may be interchangeably interpreted. Application of one codeword and the number of layers being four or less may be interchangeably interpreted.

In the present disclosure, the table may be interpreted as one or more tables.

The DCI in the embodiments described below may mean the DCI (for example, DCI format 0_x or 1_x (here, x is an integer) ) scheduling at least one of the PUSCH and the PDSCH. The embodiments described below are premised on codebook-based transmission (PUSCH), but are not limited thereto.

### (Radio Communication Method)

### <First Embodiment>

A first embodiment relates to a case in which the DCI includes one precoding information field.

The precoding information field may indicate the number of layers for each coherent group (which is also referred to as a set of the numbers of layers) and one TPMI index. The precoding information field may be applied only to the partial-coherent UE.

For example, the UE including two coherent groups may indicate two numbers of layers (each of the numbers of layers does not exceed four) and one TPMI index. The UE including four coherent groups may indicate four numbers of layers (each of the numbers of layers does not exceed two) and one TPMI index.

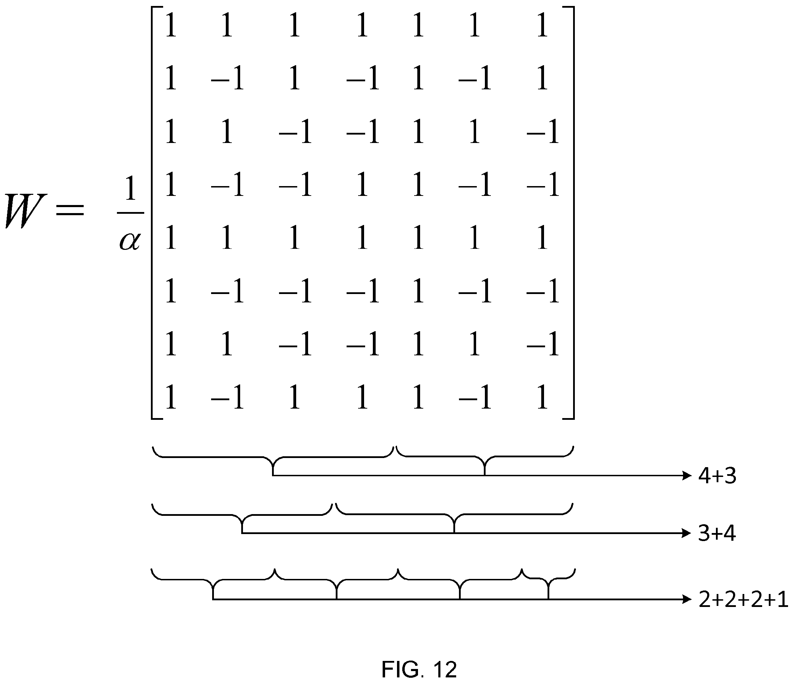

FIG. 12 is a diagram to show an example of the sets of the numbers of layers corresponding to precoding matrices. As shown in the figure, in spite of the same precoding matrices W, the divisions (sets) of the numbers of layers for each coherent group includes 4+3, 3+4, 2+2+2+1, and the like.

In the first embodiment, the correspondence (e.g., table) between the value of the precoding information field and both the set of the numbers of layers and the TPMI index may be defined. Based on the correspondence, the UE may determine the set of the numbers of layers and the TPMI index corresponding to the specified precoding information field.

Note that the correspondence may include the association of the sets of different numbers of layers (rows, entries) with the same TPMI index.

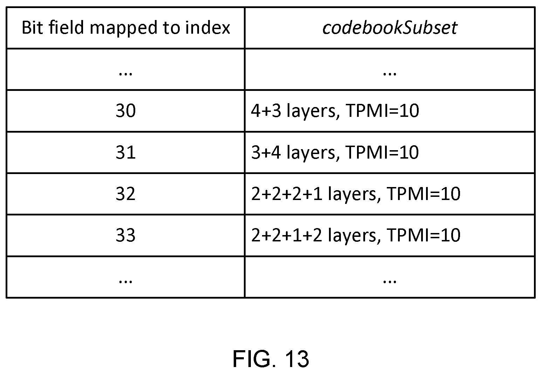

FIG. 13 is a diagram to show an example of correspondence between the value of the precoding information field and both the set of the numbers of layers and the TPMI index according to the first embodiment. In the present example, for the values of 30 to 33 for the precoding information field, the TPMI index = 10 (indicating a precoder for seven layers) is associated with 4+3, 3+4, 2+2+2+1, and 2+2+1+2 as the set of the numbers of layers.

Note that, in the present disclosure, the application ordering of the coherent groups for the sets of the numbers of layers may be predefined or the UE may be notified of the application ordering by higher layer/physical layer signaling. For example, the set of the numbers of layers 4+3 may indicate four layers for the first coherent group and three layers for the second coherent group.

Note that the correspondence as shown in FIG. 13 may be applied to the full-coherent UE, the non-coherent UE, and the partial-coherent UE. For example, when any of the values of 30 to 33 for the precoding information field in FIG. 13 are specified for the full-coherent UE and the non-coherent UE, the number of layers of 7 that is the total of the set of the numbers of layers may be determined to be specified.

The correspondence as shown in FIG. 13 may be expressed by one common table or using separate tables for different UE capabilities (capabilities of the coherent groups). For example, the UE including two coherent groups may reference a table including columns indicating the sets of two numbers of layers at the values of 30 and 31 for the precoding information field in FIG. 13, and the UE including four coherent groups may reference a table including columns indicating the sets of four numbers of layers at the values of 32 and 33 for the precoding information field in FIG. 13.

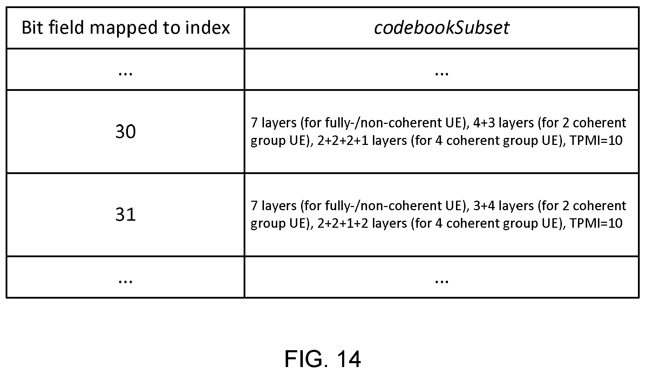

Note that the UE including different coherent groups may differently interpret the same value of the precoding information field. FIG. 14 is a diagram to show an example of correspondence between the value of the precoding information field and both the set of the numbers of layers and the TPMI index according to a first embodiment.

In the present example, when notified of the value of 30 for the precoding information field, the fully/non-coherent UE interprets that the UE is notified of seven layers, the UE including two coherent groups interprets that the UE is notified of 4+3 layers, and the UE including four coherent groups interprets that the UE is notified of 2+2+2+1 layers.

When notified of the value of 31 for the precoding information field, the fully/non-coherent UE interprets that the UE is notified of seven layers, the UE including two coherent groups interprets that the UE is notified of 3+4 layers, and the UE including four coherent groups interprets that the UE is notified of 2+2+1+2 layers.

Note that the rank can be clarified for some precoders and thus that the table need not explicitly indicate the sets of the numbers of layers associated with some values of the precoding information field.

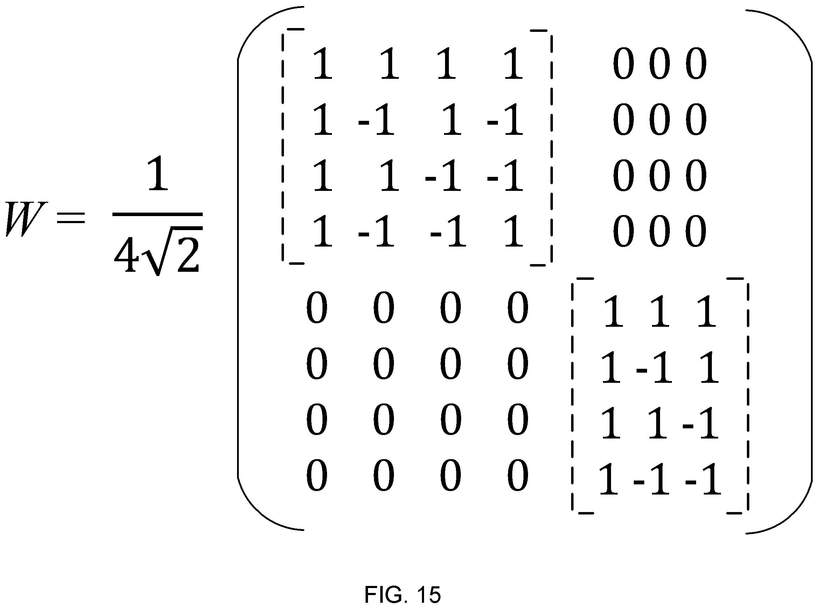

FIG. 15 is a diagram to show an example of the sets of the numbers of layers corresponding to precoding matrices. The precoding matrices W shown in the figure diagonally include 4x4 matrices and 3x3 matrices, and thus the set of the numbers of layers for the partial-coherent UE implicitly indicates 4+3.

According to the first embodiment, the UE can appropriately recognize the number of layers for each coherent group.

### <Second Embodiment>

A second embodiment relates to a case in which the DCI includes one precoding information field.

In the second embodiment, the correspondence (e.g., table) between the value of the precoding information field and both the number of layers and the TPMI index may be defined. Based on the correspondence, the UE may determine the number of layers and the TPMI index corresponding to the specified precoding information field.

In other words, in the second embodiment, the field value of the precoding information included in the DCI is consistently associated with the number of layers (total number of layers) as shown in FIG. 6. On the other hand, in the second embodiment, the above-described DCI includes a new field related to a set of the numbers of layers corresponding to a case in which the number of layers is specified (which field is hereinafter referred to as an indication field of the set of the numbers of layers for different coherent groups, a rank set indication field, or the like). The UE may determine the set of the numbers of layers based on the rank set indication field and the specified number of layers.

The rank set indication field may be applied only to the partial-coherent UE, or may be included only in the DCI for the partial-coherent UE.

Correspondence (for example, a table) between the rank set indication field value and the set of the numbers of layers may be defined. Note that the correspondence may be defined for each number of coherent groups. The correspondence may be defined for all of the numbers of layers (for example, one to eight layers) or for some of the numbers of layers (for example, the numbers of layers which are each greater than four). In other words, the correspondence may vary with each number of layers.

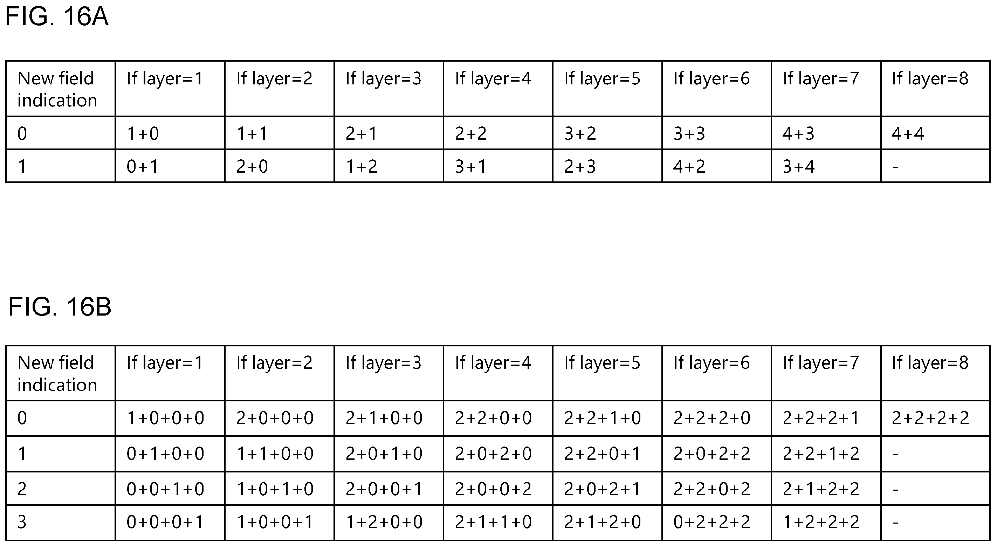

FIGS. 16A and 16B are diagrams to show an example of correspondence between the value of a rank set specification field and the set of the numbers of layers according to the second embodiment. FIG. 16A shows the correspondence for an eight-Tx UE including two coherent groups. FIG. 16B shows the correspondence for an eight-Tx UE including four coherent groups. "New field indication" in the figures corresponds to the value of the rank set specification field.

For example, in FIG. 16A, the UE specified with the layer 7 by the precoding information field may determine the set of the numbers of layers to be 4+3 in a case where the rank set specification field = 0 and may determine the set of the numbers of layers to be 3+4 in a case where the rank set specification field = 1.

Note that some of the sets (for example, 1+0, 0+1, 2+0, and the like) need not be defined.

The size of the rank set specification field is 1 bit in FIG. 16A or 2 bits in FIG. 16B, but may depend on the coherent capability of the UE or may be explicitly/implicitly configured by higher layer signaling taking account of the possible sets of the numbers of layers. Note that the possible sets of the numbers of layers may be predefined (for each table) or may be configured by higher layer signaling. The UE may be configured, by higher layer signaling, with the set of the numbers of layers corresponding to a given rank set specification field, the number of layers, and the number of coherent groups.

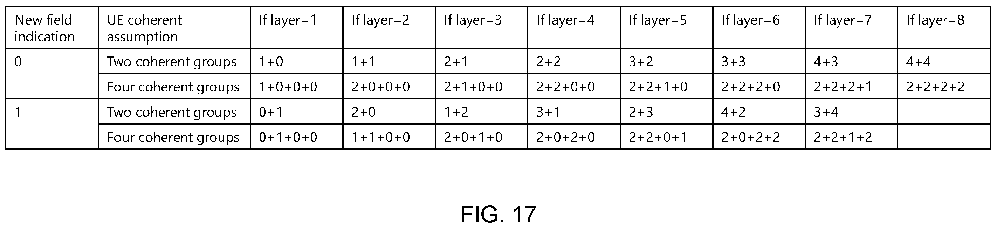

The correspondence as shown in FIGS. 16A and 16B may be expressed by one common table or using separate tables for different UE capabilities (capabilities of the coherent groups). Note that the UE including different coherent groups may differently interpret the same value of the rank set specification field. FIG. 17 is a diagram to show an example of correspondence between the value of the rank set specification field and the set of the numbers of layers according to the second embodiment.

In the present example, the UE with two coherent groups specified with the layer 7 by the precoding information field may determine the set of the numbers of layers to be 4+3 in a case where the rank set specification field = 0 and may determine the set of the numbers of layers to be 3+4 in a case where the rank set specification field = 1.

The UE with four coherent groups specified with the layer 7 by the precoding information field may determine the set of the numbers of layers to be 2+2+2+1 in a case where the rank set specification field = 0 and may determine the set of the numbers of layers to be 2+2+1+2 in a case where the rank set specification field = 1.

According to the second embodiment, the UE can appropriately recognize the number of layers for each coherent group.

### <Third Embodiment>

A third embodiment relates to a case in which the DCI includes a plurality of precoding information fields (or a plurality of sets of the TPMI index field and the layer indication field). The third embodiment will be described using the precoding information field for simplification. However, the precoding information field in the third embodiment may be interpreted as the TPMI index field/layer indication field.

In the third embodiment, which coherent group corresponds to (is associated with) the i-th (i is integer) precoding information field included in the DCI may be determined in accordance with a given rule. The UE may determine that the i-th precoding information field corresponds to the i-th coherent group, for example.

In the third embodiment, the above-described DCI includes a new field related to the ordering (application ordering) of the coherent group corresponding to each precoding information field (which field is hereinafter referred to as a coherent group ordering field, an ordering field, or the like). The UE may determine the coherent group corresponding to each precoding information field based on the ordering field.

The ordering field may be applied only to the partial-coherent UE, or may be included only in the DCI for the partial-coherent UE.

Correspondence (for example, a table) between an ordering field value and the ordering of the coherent groups of layers may be defined. Note that the correspondence may be defined for each number of coherent groups. The correspondence may be defined for all of the numbers of layers (for example, one to eight layers) or for some of the numbers of layers (for example, the numbers of layers which are greater than four). In other words, the correspondence may vary with each number of layers.

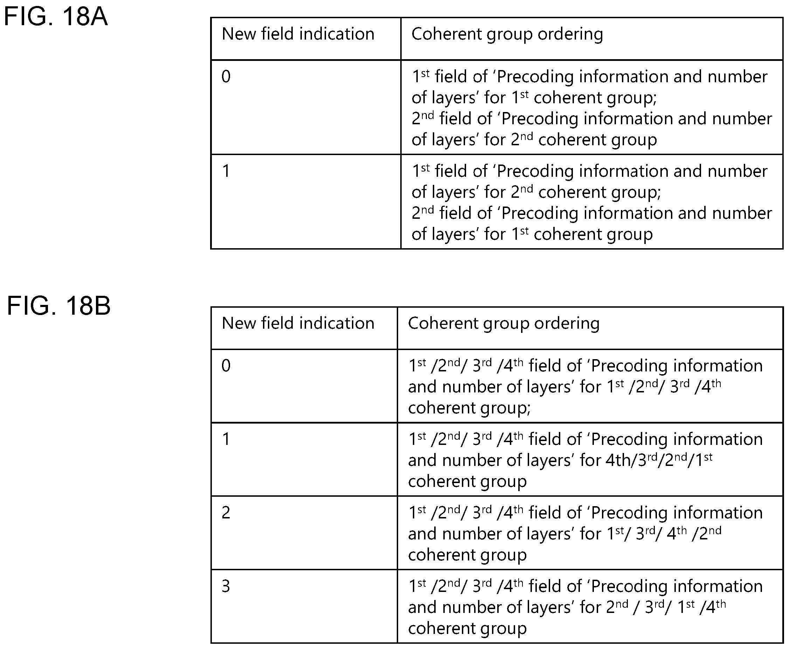

FIGS. 18A and 18B are diagrams to show an example of correspondence between the value of the ordering field and the ordering of the coherent groups according to the third embodiment. FIG. 18A shows the correspondence for the eight-Tx UE including two coherent groups. FIG. 18B shows the correspondence for the eight-Tx UE including four coherent groups. "New field indication" in the figures corresponds to the value of the ordering field.

For example, the UE complying with the correspondence in FIG. 18A may determine that the first and second precoding information fields respectively correspond to the first and second coherent group in a case where the ordering field = 0 and may determine that the second and first precoding information fields respectively correspond to the first and second coherent group in a case where the ordering field = 1.

The UE complying with the correspondence in FIG. 18B may determine that the first, second, third, and fourth precoding information fields respectively correspond to the first, third, fourth, and second coherent groups, for example, in a case where the ordering field = 2.

The size of the ordering field is 1 bit in FIG. 18A or 2 bits in FIG. 18B, but may depend on the coherent capability of the UE or may be explicitly/implicitly configured by higher layer signaling taking account of the possible sets of the numbers of layers. Note that the possible sets of the numbers of layers may be predefined (for each table) or may be configured by higher layer signaling. The UE may be configured, by higher layer signaling, with the ordering of the coherent groups corresponding to a given ordering field and the number of coherent groups.

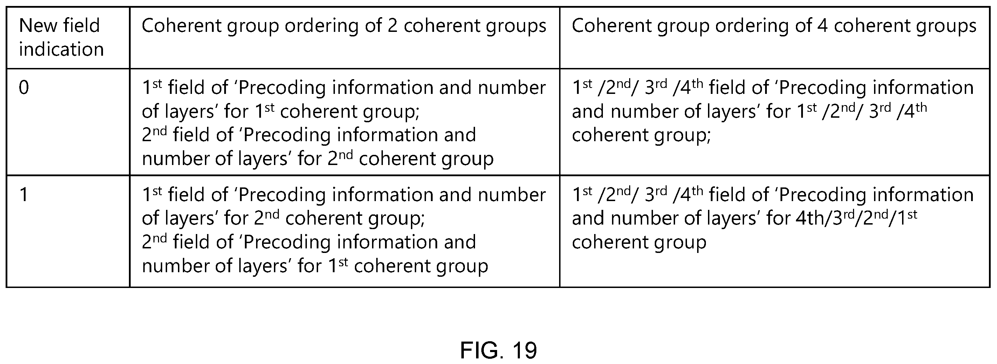

The correspondence as shown in FIGS. 18A and 18B may be expressed by one common table or using separate tables for different UE capabilities (capabilities of the coherent groups). The UE including different coherent groups may differently interpret the same value of the ordering field. FIG. 19 is a diagram to show an example of correspondence between the value of the ordering field and the ordering of the coherent groups according to the third embodiment.

In the present example, the UE with two coherent groups may determine that the first and second precoding information fields respectively correspond to the first and second coherent groups in a case where the ordering field = 0 and may determine that the second and first precoding information fields respectively correspond to the first and second coherent groups in a case where the ordering field = 1.

The UE with two coherent groups may determine that the first, second, third, and fourth precoding information fields respectively correspond to the first, second, third, and fourth coherent groups in a case where the ordering field = 0 and may determine that the first, second, third, and fourth precoding information fields respectively correspond to the fourth, third, second, and first coherent groups in a case where the ordering field = 1.

According to the third embodiment, the UE can appropriately recognize the number of layers/TPMI index for each coherent group.

### <Supplement>

### [Notification of Information to UE]

Notification of any information to a UE (from a network (NW) (for example, a base station (BS))) (in other words, reception of any information in the UE from the BS) may be performed by using physical layer signaling (for example, DCI), higher layer signaling (for example, RRC signaling, MAC CE), or a specific signal/channel (for example, a PDCCH, a PDSCH, a reference signal), or a combination of these.

When the notification is performed by a MAC CE, the MAC CE may be identified by a new logical channel ID (LCID) not defined in an existing standard being included in a MAC subheader.

When the notification is performed by DCI, the notification may be performed by a specific field of the DCI, a radio network temporary identifier (RNTI) used for scrambling of cyclic redundancy check (CRC) bits included in the DCI, the format of the DCI, or the like.

Notification of any information to a UE in the above-described embodiments may be performed periodically, semi-persistently, or aperiodically.

### [Notification of Information from UE]

Notification of any information from a UE (to an NW) (in other words, transmission/reporting of any information in the UE to the BS) in the above-described embodiments may be performed by using physical layer signaling (for example, UCI), higher layer signaling (for example, RRC signaling, MAC CE), or a specific signal/channel (for example, a PUCCH, a PUSCH, a PRACH, a reference signal), or a combination of these.

When the notification is performed by a MAC CE, the MAC CE may be identified by a new LCID not defined in an existing standard being included in a MAC subheader.

When the notification is performed by UCI, the notification may be transmitted by using a PUCCH or a PUSCH.

Notification of any information from a UE in the above-described embodiments may be performed periodically, semi-persistently, or aperiodically.

### [Application of Each Embodiment]

At least one of the above-described embodiments may be applied when a specific condition is satisfied. The specific condition may be defined in a standard, or the UE/BS may be notified of the condition by using higher layer signaling/physical layer signaling.

At least one of the above-described embodiments may be applied only to a UE that has reported a specific UE capability or that supports the specific UE capability.

The specific UE capability may indicate at least one of the following:
- Support of specific processing/operation/control/information for at least one of the above-described embodiments,
- Support of eight TX UL transmission, and
- Supported coherent groups.

The specific UE capability may be a capability applied over all the frequencies (in common irrespective of frequency), a capability for each frequency (for example, one of or a combination of cell, band, band combination, BWP, component carrier, and the like), a capability for each frequency range (for example, Frequency Range 1 (FR1), FR2, FR3, FR4, FR5, FR2-1, and FR2-2), a capability for each subcarrier spacing (SCS), or a capability for each Feature Set (FS) or Feature Set Per Component-carrier (FSPC).

The specific UE capability may be capability applied over all the duplex schemes (commonly irrespective of duplex scheme) or capability per duplex scheme (for example, time division duplex (TDD) or per frequency division duplex (FDD)).

At least one of the above-described embodiments may be applied when specific information related to the above-described embodiment (or carrying out the operation of the above-described embodiment) is configured/activated/triggered for a UE by higher layer signaling/physical layer signaling. For example, the specific information may be information indicating that the eight TX UL transmission is enabled, any RRC parameter for a specific resource (for example, Rel. 18/19), or the like.

When the UE does not support at least one of the specific UE capabilities above or is not configured with the specific information, operation of Rel. 15/16 may be applied, for example.

### (Supplementary Note)

Regarding one embodiment of the present disclosure, the following supplementary notes of the invention will be given.

### {Supplementary Note 1}

A terminal including:
a receiving section that receives downlink control information (DCI) including one or more fields indicating a number of layers for physical uplink shared channel transmission; and
a control section that determines the number of layers per coherent group for the physical uplink shared channel transmission, based on a specific field included in the DCI.

### {Supplementary Note 2}

The terminal according to Supplementary Note 1, wherein when the one or more fields are one field related to precoding information and the number of layers, the control section references, based on the one field related to the precoding information and the number of layers as the specific field, correspondence between a value of the one field related to the precoding information and the number of layers and the number of layers per coherent group to determine the number of layers per coherent group.

### {Supplementary Note 3}

The terminal according to Supplementary Note 1 or 2, wherein when the one or more fields are one field related to precoding information and number of layers, the control section determines the number of layers per coherent group, based on, as the specific field, a field related to a set of the corresponding numbers of layers in case of the given number of layers being specified.

### {Supplementary Note 4}

The terminal according to any of Supplementary Notes 1 to 3, when the one or more fields are a plurality of fields related to precoding information and the number of layers, the control section determines the number of layers per coherent group, based on, as the specific field, a field related to application ordering of the coherent group corresponding to each of precoding information fields.

### (Radio Communication System)

Hereinafter, a structure of a radio communication system according to one embodiment of the present disclosure will be described. In this radio communication system, the radio communication method according to each embodiment of the present disclosure described above may be used alone or may be used in combination for communication.

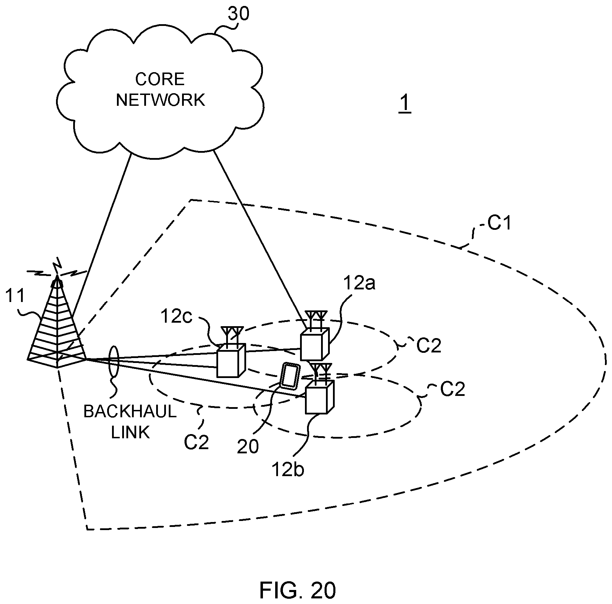

FIG. 20 is a diagram to show an example of a schematic structure of the radio communication system according to one embodiment. The radio communication system 1(which may simply be referred to as the system 1) may be a system implementing a communication using Long Term Evolution (LTE), 5th generation mobile communication system New Radio (5G NR) and so on the specifications of which have been drafted by Third Generation Partnership Project (3GPP).

The radio communication system 1 may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and so on.

In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.

The radio communication system 1 may support dual connectivity between a plurality of base stations in the same RAT (for example, dual connectivity (NR-NR Dual Connectivity (NN-DC)) where both of an MN and an SN are base stations (gNB) of NR).

The radio communication system 1 may include a base station 11 that forms a macro cell C1 of a relatively wide coverage, and base stations 12 (12a to 12c) that form small cells C2, which are placed within the macro cell C1 and which are narrower than the macro cell C1. The user terminal 20 may be located in at least one cell. The arrangement, the number, and the like of each cell and user terminal 20 are by no means limited to the aspect shown in the diagram. Hereinafter, the base stations 11 and 12 will be collectively referred to as "base stations 10," unless specified otherwise.

The user terminal 20 may be connected to at least one of the plurality of base stations 10. The user terminal 20 may use at least one of carrier aggregation (CA) and dual connectivity (DC) using a plurality of component carriers (CCs).

Each CC may be included in at least one of a first frequency band (Frequency Range 1 (FR1)) and a second frequency band (Frequency Range 2 (FR2)). The macro cell C1 may be included in FR1, and the small cells C2 may be included in FR2. For example, FR1 may be a frequency band of 6 GHz or less (sub-6 GHz), and FR2 may be a frequency band which is higher than 24 GHz (above-24 GHz). Note that frequency bands, definitions and so on of FR1 and FR2 are by no means limited to these, and for example, FR1 may correspond to a frequency band which is higher than FR2.

The user terminal 20 may communicate using at least one of time division duplex (TDD) and frequency division duplex (FDD) in each CC.

The plurality of base stations 10 may be connected by a wired connection (for example, optical fiber in compliance with the Common Public Radio Interface (CPRI), the X2 interface and so on) or a wireless connection (for example, an NR communication). For example, if an NR communication is used as a backhaul between the base stations 11 and 12, the base station 11 corresponding to a higher station may be referred to as an "Integrated Access Backhaul (IAB) donor," and the base station 12 corresponding to a relay station (relay) may be referred to as an "IAB node."

The base station 10 may be connected to a core network 30 through another base station 10 or directly. For example, the core network 30 may include at least one of Evolved Packet Core (EPC), 5G Core Network (5GCN), Next Generation Core (NGC), and so on.

The core network 30 may include, for example, Network Functions (NFs) such as a User Plane Function (UPF), an Access and Mobility management Function (AMF), a Session Management Function (SMF), Unified Data Management (UDM), an Application Function (AF), a Data Network (DN), a Location Management Function (LMF), Operation, Administration and Maintenance (Management) (OAM). Note that a plurality of functions may be provided by one network node. Communication with an external network (for example, the Internet) may be performed via the DN.

The user terminal 20 may be a terminal supporting at least one of communication schemes such as LTE, LTE-A, 5G, and so on.

In the radio communication system 1, an orthogonal frequency division multiplexing (OFDM)-based wireless access scheme may be used. For example, in at least one of the downlink (DL) and the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and so on may be used.

The wireless access scheme may be referred to as a "waveform." Note that, in the radio communication system 1, another wireless access scheme (for example, another single carrier transmission scheme, another multi-carrier transmission scheme) may be used for a wireless access scheme in the UL and the DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)) and so on, may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on may be used as uplink channels.

User data, higher layer control information, System Information Blocks (SIBs) and so on are communicated on the PDSCH. User data, higher layer control information and so on may be communicated on the PUSCH. The Master Information Blocks (MIBs) may be communicated on the PBCH.

Lower layer control information may be communicated on the PDCCH. For example, the lower layer control information may include downlink control information (DCI) including scheduling information of at least one of the PDSCH and the PUSCH.

Note that DCI for scheduling the PDSCH may be referred to as "DL assignment," "DL DCI," and so on, and DCI for scheduling the PUSCH may be referred to as "UL grant," "UL DCI," and so on. Note that the PDSCH may be interpreted as "DL data", and the PUSCH may be interpreted as "UL data".

For detection of the PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a given search space, based on search space configuration.

One search space may correspond to a PDCCH candidate corresponding to one or more aggregation levels. One or more search spaces may be referred to as a "search space set." Note that a "search space," a "search space set," a "search space configuration," a "search space set configuration," a "CORESET," a "CORESET configuration" and so on of the present disclosure may be interchangeably interpreted.

Uplink control information (UCI) including at least one of channel state information (CSI), transmission confirmation information (for example, which may be referred to as Hybrid Automatic Repeat reQuest ACKnowledgement (HARQ-ACK), ACK/NACK, and so on), and scheduling request (SR) may be communicated by means of the PUCCH. By means of the PRACH, random access preambles for establishing connections with cells may be communicated.

Note that the downlink, the uplink, and so on in the present disclosure may be expressed without a term of "link." In addition, various channels may be expressed without adding "Physical" to the head.

In the radio communication system 1, a synchronization signal (SS), a downlink reference signal (DL-RS), and so on may be communicated. In the radio communication system 1, a cell-specific reference signal (CRS), a channel state information-reference signal (CSI-RS), a demodulation reference signal (DMRS), a positioning reference signal (PRS), a phase tracking reference signal (PTRS), and so on may be communicated as the DL-RS.

For example, the synchronization signal may be at least one of a primary synchronization signal (PSS) and a secondary synchronization signal (SSS). A signal block including an SS (PSS, SSS) and a PBCH (and a DMRS for a PBCH) may be referred to as an "SS/PBCH block," an "SS Block (SSB)," and so on. Note that an SS, an SSB, and so on may be referred to as a "reference signal."

In the radio communication system 1, a sounding reference signal (SRS), a demodulation reference signal (DMRS), and so on may be communicated as an uplink reference signal (UL-RS). Note that DMRS may be referred to as a "user terminal specific reference signal (UE-specific Reference Signal)."

### (Base Station)

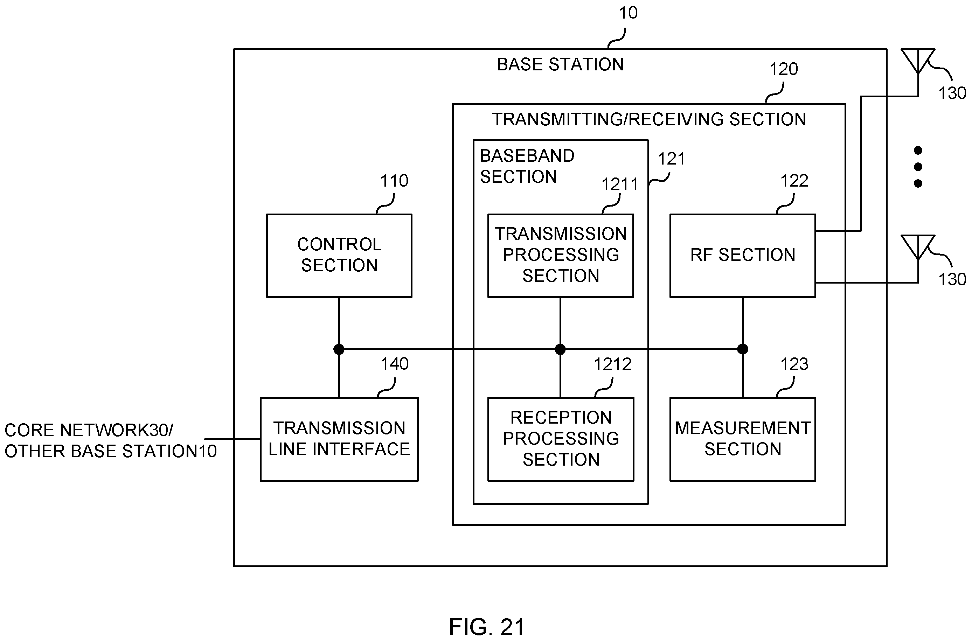

FIG. 21 is a diagram to show an example of a structure of the base station according to one embodiment. The base station 10 includes a control section 110, a transmitting/receiving section 120, transmitting/receiving antennas 130 and a communication path interface (transmission line interface) 140. Note that the base station 10 may include one or more control sections 110, one or more transmitting/receiving sections 120, one or more transmitting/receiving antennas 130, and one or more communication path interfaces 140.

Note that, the present example primarily shows functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource allocation, mapping), and so on. The control section 110 may control transmission and reception, measurement and so on using the transmitting/receiving section 120, the transmitting/receiving antennas 130, and the communication path interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211, and the RF section 122. The receiving section may be constituted with the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmit beam and a receive beam by using digital beam forming (for example, precoding), analog beam forming (for example, phase rotation), and so on.

The transmitting/receiving section 120 (transmission processing section 1211) may perform the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), and so on, for example, on data and control information and so on acquired from the control section 110, and may generate bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, and so on, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, and so on, on the signal of the radio frequency band received by the transmitting/receiving antennas 130.

The transmitting/receiving section 120 (reception processing section 1212) may apply reception processing such as analog-digital conversion, fast Fourier transform (FFT) processing, inverse discrete Fourier transform (IDFT) processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 120 (measurement section 123) may perform the measurement related to the received signal. For example, the measurement section 123 may perform Radio Resource Management (RRM) measurement, Channel State Information (CSI) measurement, and so on, based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 110.

The communication path interface 140 may perform transmission/reception (backhaul signaling) of a signal with an apparatus (for example, a network node providing the NF) included in the core network 30 or other base stations 10, and so on, and acquire or transmit user data (user plane data), control plane data, and so on for the user terminal 20.

Note that the transmitting section and the receiving section of the base station 10 in the present disclosure may be constituted with at least one of the transmitting/receiving section 120, the transmitting/receiving antennas 130, and the communication path interface 140.

Note that the transmitting/receiving section 120 may transmit downlink control information (DCI) including one or more fields indicating the number of layers for physical uplink shared channel (PUSCH) transmission. In the present disclosure, PUSCH transmission and the PUSCH may be interchangeably interpreted.

The control section 110 may control reception processing for the physical uplink shared channel transmission based on the number of layers per coherent group for the physical uplink shared channel transmission, the number of layers per coherent group being determined based on a specific field included in the DCI.

### (User Terminal)

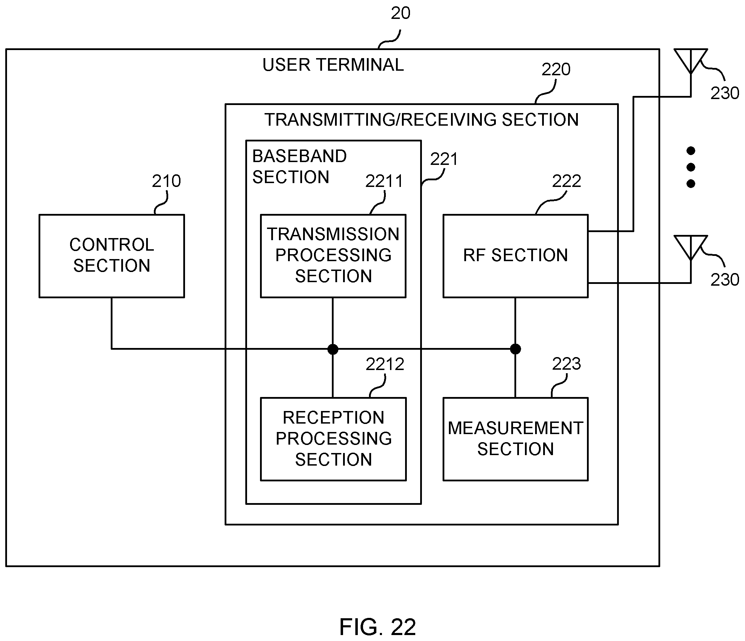

FIG. 22 is a diagram to show an example of a structure of the user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily shows functional blocks that pertain to characteristic parts of the present embodiment, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, or the like described based on general understanding of the technical field to which the present disclosure pertains.

The control section 210 may control generation of signals, mapping, and so on. The control section 210 may control transmission/reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 220 may be structured as a transmitting/receiving section in one entity, or may be constituted with a transmitting section and a receiving section. The transmitting section may be constituted with the transmission processing section 2211, and the RF section 222. The receiving section may be constituted with the reception processing section 2212, the RF section 222, and the measurement section 223.

The transmitting/receiving antennas 230 can be constituted with antennas, for example, an array antenna, or the like described based on general understanding of the technical field to which the present disclosure pertains.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmit beam and a receive beam by using digital beam forming (for example, precoding), analog beam forming (for example, phase rotation), and so on.

The transmitting/receiving section 220 (transmission processing section 2211) may perform the processing of the PDCP layer, the processing of the RLC layer (for example, RLC retransmission control), the processing of the MAC layer (for example, HARQ retransmission control), and so on, for example, on data and control information and so on acquired from the control section 210, and may generate bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, and so on, on the bit string to transmit, and output a baseband signal.

Note that, whether to apply DFT processing or not may be based on the configuration of the transform precoding. The transmitting/receiving section 220 (transmission processing section 2211) may perform, for a given channel (for example, PUSCH), the DFT processing as the above-described transmission processing to transmit the channel by using a DFT-s-OFDM waveform if transform precoding is enabled, and otherwise, does not need to perform the DFT processing as the above-described transmission processing.

The transmitting/receiving section 220 (RF section 222) may perform modulation to a radio frequency band, filtering, amplification, and so on, on the baseband signal, and transmit the signal of the radio frequency band through the transmitting/receiving antennas 230.

On the other hand, the transmitting/receiving section 220 (RF section 222) may perform amplification, filtering, demodulation to a baseband signal, and so on, on the signal of the radio frequency band received by the transmitting/receiving antennas 230.

The transmitting/receiving section 220 (reception processing section 2212) may apply reception processing such as analog-digital conversion, FFT processing, IDFT processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 220 (measurement section 223) may perform the measurement related to the received signal. For example, the measurement section 223 may perform RRM measurement, CSI measurement, and so on, based on the received signal. The measurement section 223 may measure a received power (for example, RSRP), a received quality (for example, RSRQ, SINR, SNR), a signal strength (for example, RSSI), channel information (for example, CSI), and so on. The measurement results may be output to the control section 210.

Note that the transmitting section and the receiving section of the user terminal 20 in the present disclosure may be constituted with at least one of the transmitting/receiving section 220 and the transmitting/receiving antennas 230.

Note that the transmitting/receiving section 220 may receive downlink control information (DCI) including one or more fields indicating the number of layers for physical uplink shared channel transmission. The control section 210 may determine the number of layers per coherent group for the physical uplink shared channel transmission, based on a specific field included in the DCI.

When the one or more fields are one field related to precoding information and the number of layers, the control section may reference, based on the one field related to the precoding information and the number of layers as the specific field, correspondence between a value of the one field related to the precoding information and the number of layers and the number of layers per coherent group to determine the number of layers per coherent group (see the first embodiment).

When the one or more fields are one field related to precoding information and the number of layers, the control section may determine the number of layers per coherent group, based on, as the specific field, a field related to a set of the corresponding numbers of layers the given number of layers being specified (see the second embodiment).

When the one or more fields are a plurality of fields related to precoding information and the number of layers fields, the control section may determine the number of layers per coherent group based on, as the specific field, a field related to application ordering of the coherent group corresponding to each of precoding information fields (see the third embodiment).

### (Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate apparatuses (for example, via wire, wireless, or the like) and using these apparatuses. The functional blocks may be implemented by combining software into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but functions are by no means limited to these. For example, a functional block (component) to implement a function of transmission may be referred to as a "transmitting section (transmitting unit)", a "transmitter", or the like. The method for implementing each component is not particularly limited as described above.

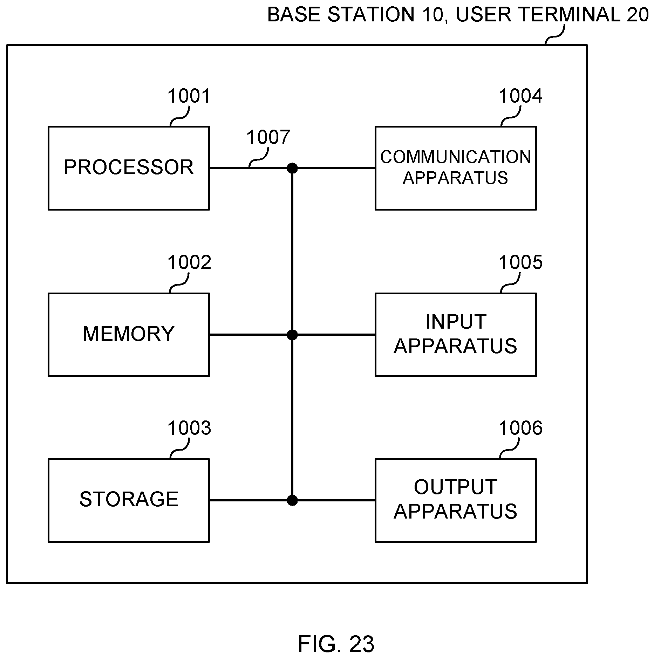

For example, a base station, a user terminal, and so on according to one embodiment of the present disclosure may function as a computer that executes the processes of the radio communication method of the present disclosure. FIG. 23 is a diagram to show an example of a hardware structure of the base station and the user terminal according to one embodiment. Physically, the above-described base station 10 and user terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably used. The hardware structure of the base station 10 and the user terminal 20 may be configured to include one or more of apparatuses shown in the drawings, or may be configured not to include part of apparatuses.

For example, although one processor 1001 is shown in the drawings, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminal 20 is implemented, for example, by allowing given software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least a part of the control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least a part of the operations explained in the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register", a "cache", a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "auxiliary storage apparatus".

The communication apparatus 1004 is hardware (transmitting/receiving device) for allowing inter-computer communication via at least one of wired and wireless networks, and may be referred to as, for example, a "network device", a "network controller", a "network card", a "communication module", and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the transmitting/receiving section 120 (220), the transmitting/receiving antenna 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor or the like). The output apparatus 1006 is an output device that allows sending output to the outside (for example, a display, a speaker, a Light Emitting Diode (LED) lamp or the like). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between apparatuses.

Also, the base station 10 and the user terminal 20 may be structured to include hardware such as a microprocessor, a Digital Signal Processor (DSP), an Application Specific Integrated Circuit (ASIC), a Programmable Logic Device (PLD), a Field Programmable Gate Array (FPGA), and so on, and a part or all of the functional blocks may be implemented by the hardware. For example, the processor 1001 may be implemented with at least one of these pieces of hardware.

### (Variations)

It should be noted that a term used in the present disclosure and a term required for understanding of the present disclosure may be replaced by a term having the same or similar meaning. For example, a channel, a symbol, and a signal (or signaling) may be interchangeably used. Further, a signal may be a message. A reference signal may be abbreviated as an RS, and may be referred to as a pilot, a pilot signal or the like, depending on which standard applies. Furthermore, a component carrier (CC) may be referred to as a cell, a frequency carrier, a carrier frequency and so on.

A radio frame may be constituted of one or a plurality of periods (frames) in the time domain. Each of one or a plurality of periods (frames) constituting a radio frame may be referred to as a "subframe". Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a given signal or channel. For example, numerology may indicate at least one of a subcarrier spacing (SCS), a bandwidth, a symbol length, a cyclic prefix length, a transmission time interval (TTI), the number of symbols per TTI, a radio frame structure, a specific filter processing performed by a transceiver in the frequency domain, a specific windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot". A mini-slot may be constituted of symbols in number less than the slot. A PDSCH (or PUSCH) transmitted in a time unit larger than a mini-slot may be referred to as "PDSCH (PUSCH) mapping type A". A PDSCH (or PUSCH) transmitted using a mini-slot may be referred to as "PDSCH (PUSCH) mapping type B".

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably used.

For example, one subframe may be referred to as a "TTI", a plurality of consecutive subframes may be referred to as a "TTI", or one slot or one mini-slot may be referred to as a "TTI". In other words, at least one of a subframe and a TTI may be a subframe (1 ms) in existing LTE, may be a period shorter than 1 ms (for example, 1 to 13 symbols), or may be a period longer than 1 ms. Note that a unit expressing TTI may be referred to as a "slot", a "mini-slot", or the like, instead of a "subframe".

Here, a TTI refers to the minimum time unit of scheduling in radio communication, for example. For example, in LTE systems, a base station performs, for user terminals, scheduling of allocating of radio resources (such as a frequency bandwidth and transmit power that are available for each user terminal) in TTI units. Note that the definition of TTIs is not limited to this.

The TTI may be a transmission time unit for channel-encoded data packets (transport blocks), code blocks, codewords, or the like, or may be a unit of processing in scheduling, link adaptation, or the like. Note that, when a TTI is given, a time interval (for example, the number of symbols) to which transport blocks, code blocks, codewords, or the like are actually mapped may be shorter than the TTI.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI", a "normal subframe", a "long subframe", a "slot" and so on. A TTI that is shorter than a normal TTI may be referred to as a "shortened TTI", a "short TTI", a "partial or fractional TTI", a "shortened subframe", a "short subframe", a "mini-slot", a "sub-slot", a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))", a "sub-carrier group (SCG)", a "resource element group (REG)", a "PRB pair", an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth", and so on) may represent a subset of contiguous common resource blocks (common RBs) for given numerology in a given carrier. Here, a common RB may be specified by an index of the RB based on the common reference point of the carrier. A PRB may be defined by a given BWP and may be numbered in the BWP.

The BWP may include a UL BWP (BWP for UL) and a DL BWP (BWP for DL). One or a plurality of BWPs may be configured in one carrier for a UE.

At least one of configured BWPs may be active, and a UE may not need to assume to transmit/receive a given signal/channel outside the active BWP(s). Note that a "cell", a "carrier", and so on in the present disclosure may be used interchangeably with a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Further, the information, parameters, and so on described in the present disclosure may be expressed using absolute values or relative values with respect to given values, or may be expressed using another corresponding information. For example, a radio resource may be specified by a given index.

The names used for parameters and so on in the present disclosure are in no respect used as limitations. Furthermore, mathematical expressions that use these parameters, and so on may be different from those explicitly disclosed in the present disclosure. Since various channels (PUCCH, PDCCH, and so on) and information elements may be identified by any suitable names, the various names allocated to these various channels and information elements are in no respect used as limitations.

The information, signals, and so on described in the present disclosure may be represented by using any of a variety of different technologies. For example, data, an instruction, a command, information, a signal, a bit, a symbol, a chip, and so on, described throughout the description of the present application, may be represented by a voltage, an electric current, electromagnetic waves, magnetic fields, a magnetic particle, optical fields, a photon, or any combination thereof.

Also, information, signals, and so on can be output at least one of from a higher layer to a lower layer and from a lower layer to a higher layer. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or added. The information, signals, and so on that has been output may be deleted. The information, signals, and so on that has been input may be transmitted to another apparatus.

Notification of information is by no means limited to the aspects/embodiments described in the present disclosure, and other methods may be used as well. For example, notification of information in the present disclosure may be implemented by using physical layer signaling (for example, downlink control information (DCI), uplink control information (UCI)), higher layer signaling (for example, Radio Resource Control (RRC) signaling, broadcast information (master information block (MIB), system information block (SIB), and so on), Medium Access Control (MAC) signaling and so on), and other signals or combinations of these.

Note that physical layer signaling may be referred to as "Layer 1/Layer 2 (L1/L2) control information (L1/L2 control signals)", "L1 control information (L1 control signal)", and so on. Also, RRC signaling may be referred to as an "RRC message", and can be, for example, an RRC connection setup message, an RRC connection reconfiguration message, and so on. Also, MAC signaling may be notified using, for example, MAC control elements (MAC CEs).

Also, notification of given information (for example, notification of "X") does not necessarily have to be performed explicitly, and can be performed implicitly (by, for example, not reporting this given information or reporting another piece of information).

A decision may be realized by a value (0 or 1) represented by one bit, by a boolean value (true or false), or by comparison of numerical values (e.g., comparison with a given value).

Software, irrespective of whether referred to as "software", "firmware", "middleware", "microcode", or "hardware description language", or called by other terms, should be interpreted broadly to mean instructions, instruction sets, codes, code segments, program codes, programs, subprograms, software modules, applications, software applications, software packages, routines, subroutines, objects, executable files, execution threads, procedures, functions, and the like.

Also, software, instructions, information, and the like may be transmitted and received via a transmission medium. For example, when software is transmitted from a website, a server, or other remote sources by using at least one of wired technologies (coaxial cable, fiber optic cable, twisted-pair cable, digital subscriber line (DSL), and so on) and wireless technologies (infrared radiation, microwaves, and so on), at least one of these wired technologies and wireless technologies is also included in the definition of the transmission medium.

The terms "system" and "network" used in the present disclosure may be used interchangeably. The "network" may mean an apparatus (for example, a base station) included in the network.

In the present disclosure, the terms such as "precoding", a "precoder", a "weight (precoding weight)", "quasi-co-location (QCL)", a "Transmission Configuration Indication state (TCI state)", a "spatial relation", a "spatial domain filter", a "transmit power", "phase rotation", an "antenna port", an "antenna port group", a "layer", "the number of layers", a "rank", a "resource", a "resource set", a "resource group", a "beam", a "beam width", a "beam angular degree", an "antenna", an "antenna element", a "panel", and so on may be used interchangeably.

In the present disclosure, the terms such as a "base station (BS)", a "radio base station", a "fixed station," a "NodeB", an "eNB (eNodeB)", a "gNB (gNodeB)", an "access point", a "transmission point (TP)", a "reception point (RP)", a "transmission/reception point (TRP)", a "panel", a "cell", a "sector", a "cell group", a "carrier", a "component carrier", and so on can be used interchangeably. The base station may be referred to as the terms such as a "macro cell", a "small cell", a "femto cell", a "pico cell", and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, transmitting information to the terminal by the base station may be interchangeably interpreted as instructing the terminal to perform control/operation based on the information by the base station.

In the present disclosure, the terms "mobile station (MS)", "user terminal", "user equipment (UE)", and "terminal" may be used interchangeably.

A mobile station may be referred to as a "subscriber station", "mobile unit", "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client", "client", or some other appropriate terms in some cases.

At least one of a base station and a mobile station may be referred to as a "transmitting apparatus", a "receiving apparatus", a "radio communication apparatus" or the like. Note that at least one of a base station and a mobile station may be a device mounted on a moving object or a moving object itself, and so on.

The moving object is a movable object with any moving speed, and naturally, it also includes a moving object stopped. Examples of the moving object include a vehicle, a transport vehicle, an automobile, a motorcycle, a bicycle, a connected car, a loading shovel, a bulldozer, a wheel loader, a dump truck, a fork lift, a train, a bus, a trolley, a rickshaw, a ship and other watercraft, an airplane, a rocket, a satellite, a drone, a multicopter, a quadcopter, a balloon, and an object mounted on any of these, but these are not restrictive. The moving object may be a moving object that autonomously travels based on a direction for moving.

The moving object may be a vehicle (for example, a car, an airplane, and the like), may be a moving object which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor.

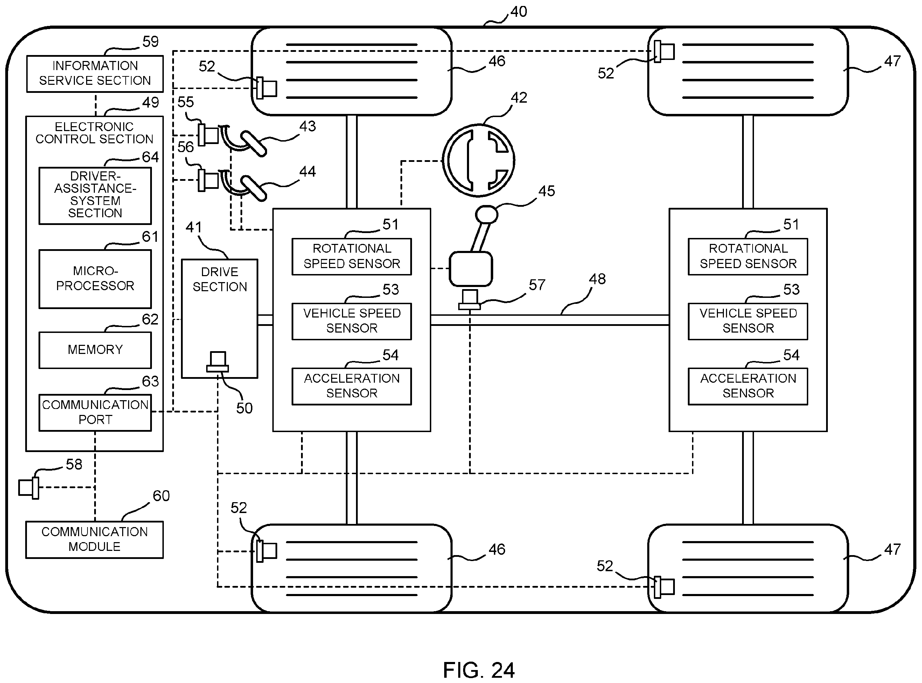

FIG. 24 is a diagram to show an example of a vehicle according to one embodiment. A vehicle 40 includes a driving section 41, a steering section 42, an accelerator pedal 43, a brake pedal 44, a shift lever 45, right and left front wheels 46, right and left rear wheels 47, an axle 48, an electronic control section 49, various sensors (including a current sensor 50, a rotational speed sensor 51, a pneumatic sensor 52, a vehicle speed sensor 53, an acceleration sensor 54, an accelerator pedal sensor 55, a brake pedal sensor 56, a shift lever sensor 57, and an object detection sensor 58), an information service section 59, and a communication module 60.

The driving section 41 includes, for example, at least one of an engine, a motor, and a hybrid of an engine and a motor. The steering section 42 includes at least a steering wheel (also referred to as a handle), and is configured to steer at least one of the front wheels 46 and the rear wheels 47, based on operation of the steering wheel operated by a user.

The electronic control section 49 includes a microprocessor 61, a memory (ROM, RAM) 62, and a communication port (for example, an input/output (IO) port) 63. The electronic control section 49 receives, as input, signals from the various sensors 50 to 58 provided in the vehicle. The electronic control section 49 may be referred to as an Electronic Control Unit (ECU).

Examples of the signals from the various sensors 50 to 58 include a current signal from the current sensor 50 for sensing current of a motor, a rotational speed signal of the front wheels 46/rear wheels 47 acquired by the rotational speed sensor 51, a pneumatic signal of the front wheels 46/rear wheels 47 acquired by the pneumatic sensor 52, a vehicle speed signal acquired by the vehicle speed sensor 53, an acceleration signal acquired by the acceleration sensor 54, a depressing amount signal of the accelerator pedal 43 acquired by the accelerator pedal sensor 55, a depressing amount signal of the brake pedal 44 acquired by the brake pedal sensor 56, an operation signal of the shift lever 45 acquired by the shift lever sensor 57, and a detection signal for detecting an obstruction, a vehicle, a pedestrian, and the like acquired by the object detection sensor 58.

The information service section 59 includes: various devices for providing (outputting) various pieces of information such as driving information, traffic information, and entertainment information, such as a car navigation system, an audio system, a speaker, a display, a television, and a radio; and one or more ECUs that control these devices. The information service section 59 provides various pieces of information/services (for example, multimedia information/multimedia service) to an occupant of the vehicle 40, using information acquired from an external apparatus via the communication module 60 and the like.

The information service section 59 may include an input device (for example, a keyboard, a mouse, a microphone, a switch, a button, a sensor, a touch panel, and the like) for receiving input from the outside, or may include an output device (for example, a display, a speaker, an LED lamp, a touch panel, and the like) for implementing output to the outside.

A driving assistance system section 64 includes: various devices for providing functions for preventing an accident and reducing a driver's driving load, such as a millimeter wave radar, Light Detection and Ranging (LiDAR), a camera, a positioning locator (for example, a Global Navigation Satellite System (GNSS) and the like), map information (for example, a high definition (HD) map, an autonomous vehicle (AV) map, and the like), a gyro system (for example, an inertial measurement apparatus (inertial measurement unit (IMU)), an inertial navigation apparatus (inertial navigation system (INS)), and the like), an artificial intelligence (AI) chip, and an AI processor; and one or more ECUs that control these devices. The driving assistance system section 64 transmits and receives various pieces of information via the communication module 60, and implements a driving assistance function or an autonomous driving function.

The communication module 60 can communicate with the microprocessor 61 and the constituent elements of the vehicle 40 via the communication port 63. For example, the communication module 60 transmits and receives data (information), via the communication port 63, to and from the driving section 41, the steering section 42, the accelerator pedal 43, the brake pedal 44, the shift lever 45, the right and left front wheels 46, the right and left rear wheels 47, the axle 48, the microprocessor 61 and the memory (ROM, RAM) 62 in the electronic control section 49, and the various sensors 50 to 58, which are included in the vehicle 40.

The communication module 60 is a communication device that can be controlled by the microprocessor 61 of the electronic control section 49 and that can perform communication with an external apparatus. For example, the communication module 60 performs transmission and reception of various pieces of information to and from the external apparatus via radio communication. The communication module 60 may be either inside or outside the electronic control section 49. The external apparatus may be, for example, the base station 10, the user terminal 20, or the like described above. The communication module 60 may be, for example, at least one of the base station 10 and the user terminal 20 described above (may function as at least one of the base station 10 and the user terminal 20).

The communication module 60 may transmit at least one of signals input from the various sensors 50 to 58 to the electronic control section 49, information obtained based on the signals, and information based on an input from the outside (a user) obtained via the information service section 59, to the external apparatus via radio communication. The electronic control section 49, the various sensors 50 to 58, the information service section 59, and the like may be referred to as input sections that receive input. For example, the PUSCH transmitted by the communication module 60 may include information based on the input.

The communication module 60 receives various pieces of information (traffic information, signal information, inter-vehicle distance information, and the like) transmitted from the external apparatus, and displays the received information on the information service section 59 included in the vehicle. The information service section 59 may be referred to as an output section that outputs information (for example, outputs information to devices, such as a display and a speaker, based on the PDSCH received by the communication module 60 (or data/information decoded from the PDSCH)).

The communication module 60 stores the various pieces of information received from the external apparatus in the memory 62 that can be used by the microprocessor 61. Based on the pieces of information stored in the memory 62, the microprocessor 61 may control the driving section 41, the steering section 42, the accelerator pedal 43, the brake pedal 44, the shift lever 45, the right and left front wheels 46, the right and left rear wheels 47, the axle 48, the various sensors 50 to 58, and the like provided in the vehicle 40.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)", "Vehicle-to-Everything (V2X)", and the like). In this case, user terminals 20 may have the functions of the base stations 10 described above. The words such as "uplink" and "downlink" may be interpreted as the words corresponding to the terminal-to-terminal communication (for example, "sidelink"). For example, an uplink channel, a downlink channel and so on may be interpreted as a sidelink channel.

Likewise, the user terminal in the present disclosure may be interpreted as a base station. In this case, the base station 10 may have the functions of the user terminal 20 described above.

Operations which have been described in the present disclosure to be performed by a base station may, in some cases, be performed by an upper node of the base station. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

Each aspect/embodiment described in the present disclosure may be used independently, may be used in combination, or may be switched depending on the mode of implementation. The order of processes, sequences, flowcharts, and so on that have been used to describe the aspects/embodiments in the present disclosure may be re-ordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG (where x is, for example, an integer or a decimal)), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and next-generation systems that are enhanced, modified, created, or defined based on these. A plurality of systems may be combined (for example, a combination of LTE or LTE-A and 5G, and the like) for application.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first", "second", and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "deciding (determining)" as in the present disclosure herein may encompass a wide variety of actions. For example, "deciding (determining)" may be interpreted to mean making "decisions(determinations)" about judging, calculating, computing, processing, deriving, investigating, looking up, search and inquiry (for example, searching a table, a database, or some other data structures), ascertaining, and so on.

Furthermore, "deciding (determining)" may be interpreted to mean making "decisions(determinations)" about receiving (for example, receiving information), transmitting (for example, transmitting information), input, output, accessing (for example, accessing data in a memory), and so on.

In addition, "deciding (determining)" as used herein may be interpreted to mean making "decisions(determinations)" about resolving, selecting, choosing, establishing, comparing, and so on. In other words, "deciding (determining)" may be interpreted to mean making "decisions (determinations)" about some action.

"Decide/deciding (determine/determining)" may be used interchangeably with "assume/assuming", "expect/expecting", "consider/considering", and the like.

"The maximum transmit power" described in the present disclosure may mean a maximum value of the transmit power, may mean the nominal maximum transmit power (the nominal UE maximum transmit power), or may mean the rated maximum transmit power (the rated UE maximum transmit power).

The terms "connected", "coupled", or any variation of these terms as used in the present disclosure mean any direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access".

In the present disclosure, when two elements are connected, the two elements may be considered "connected" or "coupled" to each other by using one or more electrical wires, cables and printed electrical connections, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other". It should be noted that the phrase may mean that "A and B are each different from C". The terms "separate", "coupled", and so on may be interpreted similarly to "different".

In the case where the terms "include", "including", and variations thereof are used in the present disclosure, these terms are intended to be comprehensive, in a manner similar to the term "comprising". Furthermore, the term "or" used in the present disclosure is not intended to be an "exclusive or".

For example, in the present disclosure, where an article such as "a", "an", and "the" is added by translation, the present disclosure may include that a noun after the article is in a plural form.

In the present disclosure, "equal to or less than", "less than", "equal to or more than", "more than", "equal to", and the like may be used interchangeably. In the present disclosure, words such as "good", "bad", "large", "small", "high", "low", "early", "late", "wide", "narrow", and the like may be used interchangeably irrespective of positive degree, comparative degree, and superlative degree. In the present disclosure, expressions obtained by adding "i-th" (i is any integer) to words such as "good", "bad", "large", "small", "high", "low", "early", "late", "wide", "narrow", and the like may be used interchangeably irrespective of positive degree, comparative degree, and superlative degree (for example, "best" may be used interchangeably with "i-th best", and vice versa).

In the present disclosure, "of", "for", "regarding", "related to", "associated with", and the like may be used interchangeably.

Now, although the invention according to the present disclosure has been described in detail above, it is apparent to a person skilled in the art that the invention according to the present disclosure is by no means limited to the embodiments described in the present disclosure. Modifications, alternatives, replacements, etc., of the invention according to the present disclosure may be possible without departing from the subject matter and the scope of the present invention defined based on the descriptions of claims. The description of the present disclosure is provided only for the purpose of explaining examples, and should by no means be construed to limit the invention according to the present disclosure in any way.

## Claims

1. A terminal comprising:
a receiving section that receives downlink control information (DCI) including one or more fields indicating a number of layers for physical uplink shared channel transmission; and
a control section that determines the number of layers per coherent group for the physical uplink shared channel transmission, based on a specific field included in the DCI.

2. The terminal according to claim 1, wherein
when the one or more fields are one field related to precoding information and the number of layers, the control section references, based on the one field related to the precoding information and the number of layers as the specific field, correspondence between a value of the one field related to the precoding information and the number of layers and the number of layers per coherent group to determine the number of layers per coherent group.

3. The terminal according to claim 1, wherein
when the one or more fields are one field related to precoding information and number of layers, the control section determines the number of layers per coherent group, based on, as the specific field, a field related to a set of the corresponding numbers of layers in case of the given number of layers being specified.

4. The terminal according to any of claim 1, wherein
when the one or more fields are a plurality of fields related to precoding information and the number of layers, the control section determines the number of layers per coherent group, based on, as the specific field, a field related to application ordering of the coherent group corresponding to each of precoding information fields.

5. A radio communication method for a terminal, the radio communication method comprising:
receiving downlink control information (DCI) including one or more fields indicating a number of layers for physical uplink shared channel transmission, and
determining the number of layers per coherent group for the physical uplink shared channel transmission, based on a specific field included in the DCI.

6. A base station comprising:
a transmitting section that transmits downlink control information (DCI) including one or more fields indicating a number of layers for physical uplink shared channel transmission, and
a control section that controls reception processing for the physical uplink shared channel transmission based on the number of layers per coherent group for the physical uplink shared channel transmission, the number of layers per coherent group being determined based on a specific field included in the DCI.
